(19) Europäisches Patentamt / European Patent Office / Office européen des brevets

(11) **EP 4 391 686 A1**

(12) **EUROPÄISCHE PATENTANMELDUNG**

(43) Veröffentlichungstag:
26.06.2024   Patentblatt 2024/26

(21) Anmeldenummer: 23217713.9

(22) Anmeldetag: **18.12.2023**

(51) Internationale Patentklassifikation (IPC):
*H04W 72/0453* (2023.01)   *H04W 72/121* (2023.01)
*H04W 72/542* (2023.01)   *H04W 72/56* (2023.01)

(52) Gemeinsame Patentklassifikation (CPC):
**H04W 72/0453; H04W 72/121; H04W 72/542;
H04W 72/56**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **20.12.2022   DE 102022134168**

(71) Anmelder: **Technische Universität Dresden
Körperschaft des
öffentlichen Rechts
01069 Dresden (DE)**

(72) Erfinder: **SCHWARZENBERG, Nick
01099 Dresden (DE)**

(74) Vertreter: **Viering, Jentschura & Partner mbB
Patent- und Rechtsanwälte
Am Brauhaus 8
01099 Dresden (DE)**

(54) **QUALITÄTSBASIERTE RESSOURCENZUORDNUNG IN EINEM KOMMUNIKATIONSNETZWERK**

(57)   Gemäß verschiedener Aspekte wird ein Netzwerk-Manager (200) bereitgestellt, der Netzwerk-Manager (200) aufweisend: einen Prozessor (202) eingerichtet zum Ausführen einer iterativen Zuordnungsprozedur (230), um jeder Client-Vorrichtung (214) aus einer Vielzahl von Client-Vorrichtungen (214) eine oder mehrere spektrale Ressourcen (216) aus einer Vielzahl von spektralen Ressourcen (216) zuzuweisen, die für eine Kommunikation mit einer Netzwerk-Vorrichtung (212) verfügbar sind, um die Zuverlässigkeit des Gesamtsystems zu maximieren.

FIG. 2

EP 4 391 686 A1

**Beschreibung**

Verschiedene Aspekte betreffen einen Netzwerk-Manager, der eingerichtet ist, eine qualitätsbasierte Ressourcenzuordnung durchzuführen, und Verfahren davon (z.B. ein Verfahren zum Zuordnen von spektralen Ressourcen an eine Vielzahl von Client-Vorrichtungen).

In den letzten Jahren wurden viele Anstrengungen zur Entwicklung und Optimierung von Telekommunikationsnetzwerken unternommen, die in vielen Aspekten des täglichen Lebens, sowohl im industriellen als auch im privaten Bereich, eine Rolle spielen. Ein Beispiel für ein kabelloses Telekommunikationsnetz ist ein sogenanntes "Wireless Local Area Network" (WLAN), in dem die Netzwerkteilnehmer innerhalb der Grenzen eines lokal begrenzten Bereichs, wie z.B. eines Universitätsgeländes, einer Fabrik, eines Hauses und dergleichen, miteinander kommunikativ verbunden sind.

Moderne Funksysteme weisen verschiedenen Nutzern unterschiedliche Frequenzen (Ressourcen) zu, um ihnen einen gleichzeitigen Zugang zum Netz zu gewähren. Die Zuteilung der Frequenzen erfolgt dabei teilweise willkürlich und bezieht nicht die individuellen Kanalrealisierungen der einzelnen Nutzer in die Entscheidung ein (entweder gar nicht oder nicht schnell genug). Für jeden Nutzer sind jedoch zu jedem Zeitpunkt die unterschiedlichen Frequenzen aufgrund von Fading unterschiedlich gut geeignet. In den Standards (z.B. LTE oder 5G) wird das Allokieren der Frequenzen mit Bezug zu den individuellen Kanalrealisierungen der Nutzer nicht explizit vorgesehen. Bei schlechter Kanalqualität wird lediglich das Kodierungsschema (MCS) angepasst und/oder den einzelnen Nutzer werden je nach Bedarf mehr oder weniger Ressourcen zugewiesen. Durch die willkürliche Zuweisung von Frequenzen und das adaptive Anpassen des Kodierungsschemas sinkt die spektrale Effizienz im Gesamtsystem bei gleichbleibender Zuverlässigkeit. Anders ausgedrückt kann insgesamt eine deutlich niedrigere Zuverlässigkeit für eine gegebene Datenrate pro Nutzer gewährleistet werden als eigentlich möglich.

Eine effiziente und zuverlässige Kommunikation ist besonders wichtig für Anwendungen, die eine geringe Latenzzeit erfordern, wie z.B. Regelungssysteme. In einem Regelungssystem können ein oder mehrere Vorrichtungen Anweisungen erhalten, um eine bestimmte Aufgabe durchzuführen, und eine Koordinierung zwischen den Vorrichtungen kann für den erfolgreichen Abschluss der Aufgabe von äußerster Wichtigkeit sein. In einem solchen System können daher Fehler bei der Datenübertragung zu nicht tolerierbaren Verzögerungen führen, die sich nachteilig auf den Gesamtbetrieb des Systems auswirken können. Regelungssysteme stellen somit besondere Anforderungen an die Latenz und Zuverlässigkeit der Kommunikationsverbindung. Das etablierte Forschungsgebiet URLLC ("Ultra-Reliable Low-Latency Communications") in der Nachrichtentechnik befasst sich mit den technischen Möglichkeiten, diese Dienstgüte einhalten zu können.

Die vorliegende Offenbarung betrifft eine Strategie zur Ressourcenzuordnung, welche die individuellen Kanalrealisierungen und die vom Nutzer geforderten Qualityof-Service Metriken bei der Zuordnung von Ressourcen einbezieht. Gemäß der hierin beschriebenen Strategie werden die Frequenzen nicht wahllos auf die Nutzer verteilt, sondern werden die globalen (Gesamtsystem) sowie individuellen (Nutzer) Anforderungen mit einbezogen. Die hierin beschriebene Strategie berücksichtigt die Kommunikationsanforderungen (z.B. Latenzanforderungen) der einzelnen Benutzer bei der Ressourcenverteilung und bietet somit eine erhöhte Zuverlässigkeit der Datenübertragung.

Die vorliegende Offenbarung bezieht sich somit auf eine iterative Ressourcenzuordnung, bei der die Qualität der verfügbaren spektralen Ressourcen für jeden Nutzer individuell ermittelt wird und bei der die verfügbaren spektralen Ressourcen den Nutzern basierend auf der jeweiligen Qualität iterativ zugeordnet werden.

Insbesondere kann die vorliegende Offenbarung auf der Erkenntnis beruhen, dass die Gesamtzuverlässigkeit eines Systems durch die Bedingungen des schwächsten Benutzers (anschaulich, des Benutzers mit den schlechtesten Kommunikationsbedingungen, z.B. des Benutzers mit dem niedrigsten Signal-Rausch-Verhältnis) begrenzt sein kann. Dies kann beispielsweise bei einem Fließband der Fall sein, bei dem der Roboter mit den schlechtesten Kanalbedingungen der begrenzende Faktor für die Effizienz und Zuverlässigkeit des Betriebs des Fließbands sein kann. Daher kann die hierin beschriebene Zuordnungsstrategie angepasst sein, um die Zuverlässigkeit eines Kommunikationssystems zu verbessern (z.B. zu maximieren), anstatt sich auf den durchschnittlichen Systemdurchsatz zu konzentrieren, wie es bei typischen Breitbandanwendungen der Fall ist.

Die hierin beschriebene Ressourcenzuordnung kann einem "Max-Min"-Kriterium folgen, gemäß dem die Zuordnung darauf abzielt, die minimale Datenrate des Systems zu maximieren (anschaulich, die Kommunikation des schwächsten Benutzers). In dieser Konfiguration kann die Ressourcenzuordnung auf der Grundlage einer Reihenfolge der Benutzer gemäß der jeweiligen Qualität der Kanalrealisierungen mit einer Netzwerk-Vorrichtung (z.B. einer Basisstation) erfolgen, beginnend mit dem Benutzer mit der niedrigsten Qualität. Diese Strategie kann sicherstellen, dass der schwächste Benutzer seine bevorzugte(n) spektrale(n) Ressource(n) erhält, wodurch die Gesamtzuverlässigkeit des Systems erhöht wird. Gemäß dem hierin beschriebenen Ansatz werden den Nutzern die für sie geeignetsten Ressourcen zugewiesen. Damit wird die spektrale Effizienz des Gesamtsystems bei gleichbleibender Zuverlässigkeit gesteigert.

Gemäß verschiedener Aspekte wird ein Netzwerk-Manager bereitgestellt. Der Netzwerk-Manager weist einen Prozessor auf, wobei der Prozessor eingerichtet ist zum: Ausführen einer Zuordnungsprozedur, um jeder Client-Vorrichtung aus einer Vielzahl von Client-Vorrichtungen eine oder mehrere spektrale Ressourcen aus einer Vielzahl von spektralen Ressourcen zuzuweisen, die für eine Kommunikation mit einer Netzwerk-Vorrichtung verfügbar sind. Die Zuordnungsprozedur weist eine Vielzahl von Iterationen auf. Für jede Iteration ist der Prozessor eingerichtet zum: Ermitteln einer Vielzahl von Qualitätsfaktoren, welche mit der Vielzahl von Client-Vorrichtungen assoziiert sind. Ein Qualitätsfaktor einer Client-Vorrichtung repräsentiert eine Kommunikationsqualität von einer oder mehreren Kanalrealisierungen zwischen der Client-Vorrichtung und der Netzwerk-Vorrichtung. Der Prozessor ist ferner eingerichtet zum Zuordnen, in jeder Iteration, einer spektralen Ressource der noch nicht zugeordneten spektralen Ressourcen an die Client-Vorrichtung mit dem kleinsten Qualitätsfaktor unter der Vielzahl von Qualitätsfaktoren.

Gemäß verschiedenen Aspekten kann ein Netzwerk-Manager einen Prozessor aufweisen, der so eingerichtet ist, dass er einer Vielzahl von Client-Vorrichtungen eine Vielzahl von spektralen Ressourcen zuordnet, wobei jede Client-Vorrichtung mit einem jeweiligen Qualitätsfaktor assoziiert ist, der eine Kommunikationsqualität zwischen der Client-Vorrichtung und einer Netzwerk-Vorrichtung repräsentiert. Der Prozessor ist eingerichtet, um die Vielzahl von spektralen Ressourcen (in einer iterativen Weise) zuzuordnen, beginnend mit der Client-Vorrichtung, welche den niedrigsten Qualitätsfaktor hat, und in aufsteigender Reihenfolge des Qualitätsfaktors fortschreitend.

Gemäß verschiedenen Aspekten wird ein Verfahren zum Zuordnen von spektralen Ressourcen bereitgestellt. Das Verfahren weist auf: Ermitteln einer Vielzahl von Qualitätsfaktoren, welche einer Vielzahl von Client-Vorrichtungen assoziiert sind. Ein Qualitätsfaktor einer Client-Vorrichtung repräsentiert eine Kommunikationsqualität von einer oder mehreren Kanalrealisierungen zwischen der Client-Vorrichtung und einer Netzwerk-Vorrichtung. Das Verfahren weist ferner auf: Zuordnen einer spektralen Ressource der noch nicht zugeordneten spektralen Ressourcen an die Client-Vorrichtung mit dem niedrigsten Qualitätsfaktor unter der Vielzahl von Qualitätsfaktoren.

Der Begriff "spektrale Ressource" kann hierin zum Beschreiben einer Ressource im Frequenzbereich verwendet werden, die für die Kommunikation zur Verfügung steht (oder verwendet wird), z.B. für die Kommunikation zwischen einer Client-Vorrichtung und einer Netzwerk-Vorrichtung.

Eine "spektrale Ressource" kann einen Abschnitt des Frequenzspektrums (z.B. das drahtlose Spektrum) aufweisen, z.B. einen Spektralbereich im Frequenzspektrum, über den eine Kommunikation durchgeführt werden kann. Als Beispiel kann eine Kommunikation (z.B. ein Datenaustausch) unter Verwendung einer "spektralen Ressource" das Senden/Empfangen eines Signals (z.B. eines Trägersignals) mit einer Frequenz innerhalb des Abschnitts des Frequenzspektrums aufweisen, der der spektralen Ressource entspricht. In diesem Szenario kann eine "spektrale Ressource" ein physikalischer Kommunikationskanal (der einen Frequenzbereich innerhalb eines Frequenzbandes des Frequenzspektrums abdeckt) oder ein physikalischer Kommunikationsunterkanal (der einen Frequenzunterbereich innerhalb eines Kommunikationskanals abdeckt) sein oder diesen aufweisen. Als weiteres Beispiel kann eine "spektrale Ressource" einen Unterträger oder eine Vielzahl von Unterträgern aufweisen, von denen jeder eine jeweilige Frequenz (und, in einigen Aspekten, eine jeweilige Modulation) hat. In diesem Szenario kann eine "spektrale Ressource" ein Symbol sein oder aufweisen, z.B. ein OFDM-Symbol (Orthogonal Frequency Division Multiplexing) oder einen Unterträger eines Symbols.

Im Rahmen der vorliegenden Beschreibung kann der Begriff "physikalischer Kommunikationskanal" eine physikalische Verbindung oder einen physikalischen Anschluss, z.B. zwischen zwei Vorrichtungen, beschreiben. Ein "physikalischer Kommunikationskanal" kann somit ein physikalisches Medium aufweisen, mittels dessen Vorrichtungen miteinander kommunizieren können. Anschaulich kann das physikalische Medium die Informationen, die mittels des "physikalischen Kommunikationskanals" übertragen/empfangen werden, physisch unterstützen und transportieren. Das physikalische Medium kann je nach Art der Kommunikation unterschiedlich eingerichtet sein, z.B. kann das physikalische Medium aus Luft, einem elektrisch leitenden Draht, einer optischen Faser oder Ähnlichem bestehen. Ein "physikalischer Kommunikationskanal" kann daher von einem "logischen Kommunikationskanal" unterschieden werden. Ein "logischer Kommunikationskanal" beschreibt ein logisches Konstrukt, um die Kommunikation zu organisieren. Ein "logischer Kommunikationskanal" kann repräsentieren, wie ein "physikalischer Kommunikationskanal" belegt oder unterteilt ist (z.B. zeitlich, mit einer bestimmten Kodierung usw.).

Ein "physikalischer Kommunikationskanal" kann somit ein physikalisches Medium oder ein Teil des physikalischen Mediums für die Kommunikation zwischen Vorrichtungen sein oder beschreiben. In verschiedenen Aspekten kann ein "physikalischer Kommunikationskanal" eine bestimmte spektrale Bandbreite innerhalb eines Frequenzbandes abdecken. Anschaulich kann ein "physikalischer Kommunikationskanal" einen Teil des physikalischen Mediums beschreiben, mittels dessen Signale auf einer bestimmten Frequenz und Bandbreite transportiert werden.

Der Begriff "Zuordnung" oder "Zuordnen" kann hierin so verwendet werden, wie er üblicherweise im Rahmen der drahtgebundenen oder drahtlosen Kommunikation verstanden wird. Der Begriff "Zuordnung" oder "Zuordnen" kann eine Zuteilung einer Einheit (z.B. einer spektralen Ressource, z.B. eines Unterkanals) an einen bestimmten Benutzer beschreiben. Die Zuordnung einer spektralen Ressource an einen Benutzer kann ein Hinweis (bzw. eine Anweisung) darauf sein, dass die spektrale Ressource für die Nutzung durch diesen bestimmten Benutzer reserviert ist (z.B. während eines bestimmten Zeitraums). Der Benutzer kann also die zugeordnete spektrale Ressource für die Kommunikation nutzen (z.B. einen bestimmten Unterkanal belegen). Zum Beispiel kann der Benutzer Signale (z.B. drahtlose Signale) mit einer Frequenz innerhalb des Abschnitts des Frequenzspektrums senden/empfangen, der der zugeordneten spektralen Ressource entspricht. Im Allgemeinen können andere Benutzer daran gehindert werden, eine einem Benutzer zugeordnete spektrale Ressource zu nutzen oder darauf zuzugreifen, z.B. bis eine neue Zuordnung erfolgt oder bis der Benutzer die spektrale Ressource "freigibt". Die Begriffe "Allokation", "Allokieren", "Zuweisung" und "Zuweisen" können in ähnlicher Weise verwendet werden wie die Begriffe "Zuordnung" und "Zuordnen".

Der Begriff "Prozessor", wie hierin verwendet, kann als jede Art von technischer Einrichtung verstanden werden, die die Verarbeitung von Daten ermöglicht. Die Daten können gemäß einer oder mehrerer spezifischer Funktionen bearbeitet werden, welche von dem Prozessor ausgeführt werden. Ferner kann ein Prozessor, wie hierin verwendet, als jede Art von Schaltung verstanden werden, z.B. jede Art von analoger oder digitaler Schaltung. Ein Prozessor kann somit eine analoge Schaltung, eine digitale Schaltung, eine Mixed-Signal-Schaltung, eine Logik-Schaltung, ein Mikroprozessor, ein Hauptprozessor (CPU), ein Grafikprozessor (GPU), ein digitaler Signalprozessor (DSP), ein Universalschaltkreis (FPGA), eine integrierte Schaltung, eine anwendungsspezifische integrierte Schaltung (ASIC), usw. oder eine beliebige Kombination davon sein oder aufweisen. Jede andere Art von Implementierung der jeweiligen Funktionen, welche detaillierter beschrieben wurden, kann ebenfalls als Prozessor verstanden werden. Es versteht sich, dass jede zwei (oder mehr) der hierin beschriebenen Prozessoren als eine einzige Einrichtung mit äquivalenter Funktionalität oder Ähnlichem realisiert werden können, und dass umgekehrt jeder einzelne hierin detailliert beschriebene Prozessor als zwei (oder mehr) separate Einrichtungen mit äquivalenter Funktionalität oder Ähnlichem realisiert werden kann.

Ausführungsbeispiele sind in den Figuren dargestellt und werden im Folgenden näher erläutert.

Es zeigen

Figur 1A ein Kommunikationsnetzwerk in einer schematischen Ansicht gemäß verschiedener Aspekte;

Figur 1B eine Kommunikationsvorrichtung in einer schematischen Ansicht gemäß verschiedener Aspekte;

Figur 2 einen Netzwerk-Manager in einer schematischen Ansicht gemäß verschiedener Aspekte;

Figur 3 die Verwendung von Präferenzlisten für eine Ressourcenzuordnung in einer schematischen Ansicht gemäß verschiedener Aspekte;

Figur 4 die Wiederholung einer Zuordnungsprozedur in verschiedenen Zeitfenstern in einer schematischen Ansicht gemäß verschiedener Aspekte;

Figur 5 einen Netzwerk-Überwacher in einer schematischen Ansicht gemäß verschiedener Aspekte; und

Figur 6 ein schematisches Flussdiagramm eines Verfahrens zum Zuordnen von spektralen Ressourcen in einem Kommunikationsnetzwerk gemäß verschiedener Aspekte.

In der folgenden ausführlichen Beschreibung wird auf die beigefügten Zeichnungen Bezug genommen, die Teil der Beschreibung bilden und in denen zur Veranschaulichung spezifische Ausführungsformen gezeigt sind, in denen die Erfindung ausgeübt werden kann. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende Beschreibung ist deshalb nicht in einschränkendem Sinne aufzufassen, und der Schutzumfang der vorliegenden Erfindung wird durch die angefügten Ansprüche definiert.

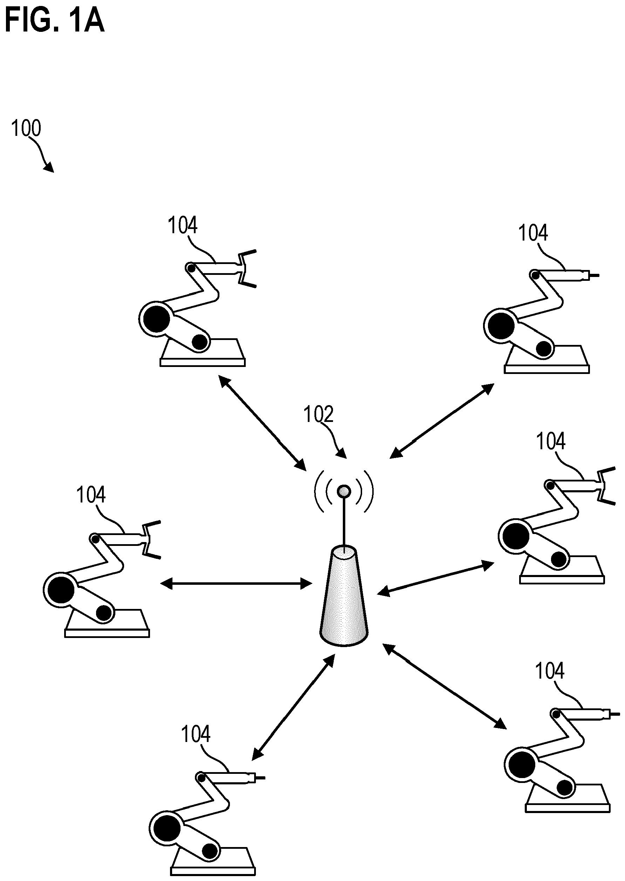

**FIG.1A** zeigt ein Kommunikationsnetzwerk 100 in einer schematischen Ansicht gemäß verschiedener Aspekte. Das Kommunikationsnetzwerk 100 stellt ein beispielhaftes Anwendungsszenario dar, in dem die hierin beschriebene Strategie implementiert werden kann. Es versteht sich jedoch, dass der hierin beschriebene Kommunikationsansatz im Allgemeinen in jedem geeigneten Kommunikationsszenario angewendet werden kann, z.B. in jedem Szenario, in dem eine Kommunikation mit hoher Zuverlässigkeit gewünscht wird.

Das Kommunikationsnetzwerk 100 kann eine Vielzahl von Vorrichtungen 102, 104 aufweisen, die kommunikativ miteinander gekoppelt sind. Wie in FIG.1A gezeigt, kann das Kommunikationsnetzwerk 100 eine erste Vorrichtung 102 und eine oder mehrere zweite Vorrichtungen 104 (z.B. eine Vielzahl von zweiten Vorrichtungen 104) aufweisen. In dieser Konfiguration kann die erste Vorrichtung 102 eine Netzwerk-Vorrichtung sein. Mit anderen Worten kann die erste Vorrichtung 102 eine netzseitige Vorrichtung sein, z.B. ein Netzteilnehmer, der eingerichtet ist, um den Betrieb des Kommunikationsnetzwerks 100 zu verwalten. Die eine oder mehreren zweiten Vorrichtungen 104 können Client-Vorrichtungen sein. Mit anderen Worten können die eine oder mehreren zweiten Vorrichtungen 104 client-seitige Vorrichtungen sein, z.B. können sie Netzwerkteilnehmer sein, die eingerichtet sind, um an dem Kommunikationsnetzwerk 100 gemäß den von der netzwerkseitigen Vorrichtung 102 vorgegebenen Regeln teilzunehmen. Es versteht sich, dass das Kommunikationsnetzwerk 100 im Allgemeinen mehr als eine netzseitige Vorrichtung aufweisen kann.

Eine Client-Vorrichtung 104 kann eine clientseitige Vorrichtung (anschaulich, eine benutzerseitige Vorrichtung) sein, die eingerichtet ist zum Verbinden mit einem Kommunikationsnetzwerk 100 mittels eines Zugangspunkts bzw. einer Basisstation. Eine Client-Vorrichtung 104 kann hierin auch als "Endpunkt-Vorrichtung", "Nutzer-Vorrichtung" oder einfach als "Nutzer" bezeichnet werden.

Die erste Vorrichtung 102 kann eine beliebige geeignete Kommunikationsvorrichtung sein oder aufweisen, die eingerichtet ist die Teilnahme anderer Vorrichtungen, an dem Kommunikationsnetzwerk 100 zu erlauben. Als Beispiel kann die erste Vorrichtung 102 ein Zugangspunkt oder eine Basisstation sein. Eine zweite Vorrichtung 104 kann eine beliebige geeignete mobile oder immobile Kommunikationsvorrichtung sein oder aufweisen, die z.B. für drahtgebundene und/oder drahtlose Kommunikation eingerichtet ist. Als Beispiele kann eine zweite Vorrichtung 104 ein Benutzergerät, eine Mobilstation, ein Laptop, ein Telefon, ein Tablet, eine Vorrichtung zur Verfolgung von Bewegungen, ein Haushaltsgerät, ein kommerzielles Gerät und dergleichen sein.

Der Begriff "Zugangspunkt" oder "Basisstation" kann eine netzwerkseitige Vorrichtung beschreiben, die eingerichtet ist, um die Konnektivität zwischen den Netzwerkteilnehmern in einem Kommunikationsnetzwerk 100 zu ermöglichen. Im Allgemeinen kann ein Zugangspunkt bzw. eine Basisstation eingerichtet sein, um anderen Vorrichtungen die Verbindung und den Informationsaustausch innerhalb eines Kommunikationsnetzwerks 100 zu ermöglichen.

In einer bevorzugten Konfiguration, die der relevanteste Anwendungsfall für die hierin beschriebene Kommunikationsstrategie mit geringer Latenz sein kann, kann die erste Vorrichtung 102 ein Controller sein und die eine oder mehreren zweiten Vorrichtungen 104 können ein oder mehrere Aktoren sein. Beispielsweise kann ein Controller eine erste Kommunikationsvorrichtung 102 sein bzw. aufweisen bzw. mit dieser gekoppelt sein. Ein Aktor kann eine zweite Kommunikationsvorrichtung 104 sein bzw. aufweisen bzw. mit dieser gekoppelt sein. Der Controller kann eingerichtet sein, um eine oder mehrere auszuführende Aufgaben zu definieren, z.B. als Teil einer vorbestimmten Aktivität oder zum Erreichen eines vorbestimmten Ziels, und kann eingerichtet sein, um die einen oder mehrere Aktoren anzuweisen, eine jeweilige Aufgabe auszuführen. In diesem Szenario können die erste Vorrichtung 102 und die eine oder mehreren zweiten Vorrichtungen 104 Teil eines rückgekoppelten Steuersystems mit einer Regelschleife sein. Anschaulich kann die erste Vorrichtung 102 eingerichtet sein, um einen Betrieb der einen oder mehreren zweiten Vorrichtungen 104 anzuweisen, und kann eingerichtet sein, um neue Anweisungen auf der Grundlage von Rückkopplungsinformationen zu generieren. Die Rückkopplungsinformationen können eine Auswirkung der von den zweiten Vorrichtungen 104 ausgeführten Aufgaben repräsentieren, z.B. einen Grad der Fertigstellung der Aktivität, eine Diskrepanz zwischen einem erwarteten Ziel und einem tatsächlichen Ziel und dergleichen. Die erste Vorrichtung 102 kann die Rückmeldeinformationen von den zweiten Vorrichtungen 104 und/oder von zusätzlichen Sensoren erhalten, die die Ausführung der Aufgaben überwachen.

Gemäß verschiedener Aspekte kann das Kommunikationsnetzwerk 100 ein lokales Netzwerk (LAN), z.B. ein WLAN, sein. Als Beispiel kann das Kommunikationsnetzwerk 100 ein LAN oder WLAN innerhalb eines physischen Ortes sein, der einer Fabrikumgebung entspricht. Das Kommunikationsnetzwerk 100 kann anschaulich ein geschlossenes System sein, in dem die Netzwerkteilnehmer 102, 104 im Rahmen eines vorbestimmten Auftrags den jeweiligen Funktionen zugewiesen sind.

Gemäß verschiedener Aspekte kann eine zweite Vorrichtung 104 eine Maschine sein oder aufweisen, z.B. eine mechanische Einheit, die eingerichtet ist, um mit Hilfe von Energie eine mechanische Aufgabe durchzuführen, wie z.B. das Aufbringen einer Kraft, das Ausüben eines Drehmoments, das Steuern einer Bewegung und ähnliches. Eine Maschine kann als Beispiel eine bewegliche Maschine, eine stationäre Maschine, eine industrielle Maschine, eine medizinische Operationsmaschine, eine landwirtschaftliche Maschine usw. aufweisen. Im Allgemeinen kann eine Maschine eine automatisierte Maschine, z.B. ein Roboter, sein, die in der Lage ist, die jeweilige Aufgabe zumindest teilweise ohne menschliche Hilfe auszuführen. Als Beispiel kann die zweite Vorrichtung 104 ein fahrerloses Transportfahrzeug sein, das sich z.B. innerhalb der Grenzen einer Fabrikumgebung bewegt.

Die Vorrichtungen 102, 104 können derart eingerichtet sein, dass sie gemäß einem vorbestimmten Kommunikationsprotokoll, z.B. einem drahtlosen Kommunikationsprotokoll und/oder einem drahtgebundenen Kommunikationsprotokoll, miteinander kommunizieren. In einer beispielhaften Konfiguration, wie in FIG.1A gezeigt ist, kann die erste Vorrichtung 102 als Manager der Kommunikation fungieren, d.h. eine zweite Vorrichtung 104 kann kommunikativ mit der ersten Vorrichtung 102 gekoppelt sein (z.B. um Anweisungen zu empfangen, Rückmeldungen zu geben usw.), aber eine direkte kommunikative Kopplung zwischen zwei zweiten Vorrichtungen 104 kann abwesend sein.

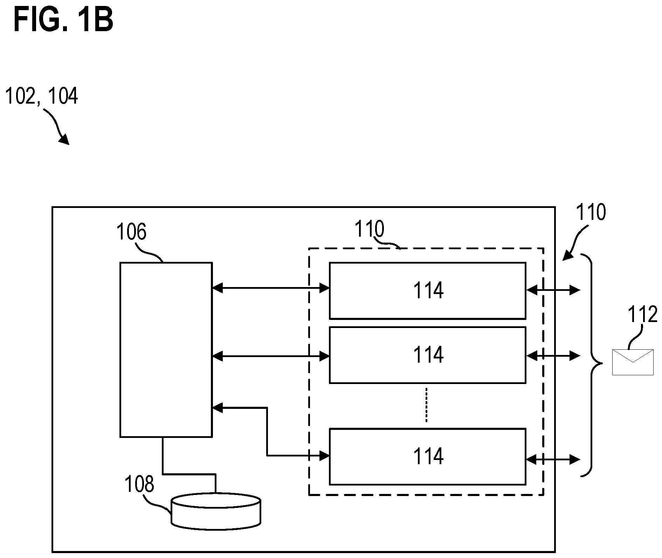

FIG.1B zeigt eine Vorrichtung 102, 104 in einer schematischen Repräsentation gemäß verschiedener Aspekte. Die Repräsentation in FIG.1B veranschaulicht beispielhafte Komponenten, die es einer Vorrichtung 102, 104 ermöglichen, mit einer anderen Vorrichtung 102, 104 zu kommunizieren. Es versteht sich, dass die Repräsentation in FIG.1B beispielhaft und zum Zweck der Veranschaulichung vereinfacht ist und dass eine Vorrichtung 102, 104 zusätzliche oder alternative Komponenten als die dargestellten aufweisen kann.

Die Vorrichtung 102, 104 kann einen Prozessor 106, eine Speichervorrichtung 108 (anschaulich, einen Speicher) und eine oder mehrere Kommunikationsschnittstellen 110 aufweisen. Als Beispiel kann die Vorrichtung 102, 104 mehrere (z.B. schmalbandige) Kommunikationsschnittstellen aufweisen. Als weiteres Beispiel kann die Vorrichtung 102, 104 eine einzige Kommunikationsschnittstelle 110 aufweisen. Beispielsweise in dem Fall, dass die Vorrichtung 102, 104 zur OFDMA-Kommunikation eingerichtet ist, kann die gesamte Bandbreite durch eine Kommunikationsschnittstelle abgedeckt werden. Als noch weiteres Beispiel kann die Vorrichtung 102, 104 eine oder mehrere Kommunikationsschnittstellen 110 aufweisen, die nur einen Teil des Spektrums abdecken, aber schnell die Frequenz wechseln können. Es versteht sich, dass die in Bezug auf mehrere Kommunikationsschnittstellen beschriebenen Aspekte auch für eine einzige Kommunikationsschnittstelle gelten können, und umgekehrt.

Im Allgemeinen kann der Prozessor 106 eingerichtet sein, um einen Betrieb der Vorrichtung 102, 104 zu steuern, z.B. kann der Prozessor 106 eingerichtet sein, um eine Übertragung/einen Empfang von Daten 112 mittels der Kommunikationsschnittstellen 110 zu steuern. Die Speichervorrichtung 108 kann eingerichtet sein, um an der Vorrichtung 102, 104 empfangene Daten und/oder von der Vorrichtung 102, 104 zu übertragende Daten zu speichern. Zusätzlich oder alternativ kann die Vorrichtung 108 eingerichtet sein, um Anweisungen zu speichern, die vom Prozessor 106 ausgeführt werden.

Jede Kommunikationsschnittstelle 110 kann eine oder mehrere Komponenten aufweisen, die es der Vorrichtung 102, 104 ermöglichen, Daten 112 (im Allgemeinen datenübertragende Signale) zu senden/empfangen. Eine Kommunikationsschnittstelle 110 kann somit eine oder mehrere Komponenten aufweisen, die eine Kodierung/Dekodierung analoger Signale für die Übertragung/den Empfang über ein physikalisches Medium ermöglichen.

Im Allgemeinen kann die hierin beschriebene Kommunikationsstrategie im Rahmen der drahtgebundenen Kommunikation und/oder der drahtlosen Kommunikation implementiert werden. Ein physikalischer Kommunikationskanal kann also ein drahtgebundener Kommunikationskanal (z.B. implementiert als Draht, optische Faser und dergleichen) oder ein Drahtlos-Kommunikationskanal (z.B. ein Funkkanal über Luft) sein. Die Komponenten der Kommunikationsschnittstellen 110 können somit je nach der Art der Kommunikation ausgewählt werden, z.B. zum Senden/Empfangen von elektrischen Signalen mittels eines Drahtes, von optischen Signalen mittels einer optischen Faser, von Funksignalen über die Luft usw. Entsprechend kann eine "spektrale Ressource" einen Abschnitt des Frequenzspektrums beschreiben, über den die Kommunikation drahtgebunden oder drahtlos durchgeführt wird.

Im Folgenden wird insbesondere auf die drahtlose Kommunikation Bezug genommen, da sie für die hierin beschriebene Strategie (z.B. zur flexiblen Steuerung mehrerer Aktoren in einem Regelsystem) der wichtigste Anwendungsfall sein kann. Daher können sich einige Begriffe auf den drahtlosen Kontext beziehen, z.B. auf bestimmte drahtlose Technologien (wie WiFi, Bluetooth usw.). Es versteht sich jedoch, dass die Aspekte und Begriffe, die hinsichtlich der drahtlosen Kommunikation beschrieben werden, in entsprechender Weise auch für die drahtgebundene Kommunikation gelten können und umgekehrt.

Im Allgemeinen kann jede Kommunikationsschnittstelle 110 eine Transceiver-Schaltung 114 (anschaulich, einen Transceiver-Chip oder eine Transceiver-Kette) aufweisen. Eine Transceiver-Schaltung 114 kann gemäß einem drahtgebundenen oder drahtlosen Kommunikationsstandard zum Senden/Empfangen von Daten 112 eingerichtet sein. Eine Transceiver-Schaltung 114 kann somit analoge und/oder digitale Komponenten aufweisen, die eingerichtet sind, um Sende-/Empfangsvorgänge gemäß einer bestimmten Kommunikationstechnologie durchzuführen. Als Beispiel, das den relevantesten Anwendungsfall für die hierin beschriebene Strategie repräsentiert, kann eine Transceiver-Schaltung 114 gemäß einem WLAN-Kommunikationsprotokoll oder -standard (z.B. IEEE 802.11) eingerichtet sein bzw. werden. Als weitere Beispiele kann eine Transceiver-Schaltung 114 gemäß dem Bluetooth-Standard, dem Zigbee-Standard, den 3G-, 4G-, 5G- und/oder 6G-Mobilfunkkommunikationsstandards und dergleichen eingerichtet sein bzw. werden. Als weiteres Beispiel für eine drahtgebundene Kommunikation kann eine Transceiver-Schaltung 114 gemäß einem Stromleitungs-Kommunikationsprotokoll eingerichtet sein bzw. werden, z.B. gemäß dem One-Wire-Kommunikationsprotokoll. In einer beispielhaften Konfiguration, die eine kosteneffiziente Implementierung ermöglicht, kann jede Kommunikationsschnittstelle 110 ein WLAN-Modem aufweisen.

In einer beispielhaften Konfiguration für die drahtlose Kommunikation kann eine Transceiver-Schaltung 114 eine Antenne (nicht gezeigt) aufweisen oder mit einer Antenne gekoppelt sein, z.B. eine einzelne Antenne oder eine Antennengruppe, und kann Hochfrequenzsignale mittels der entsprechenden Antenne senden und/oder empfangen. In dieser Konfiguration ist eine Transceiver-Schaltung 114 ein RF-Transceiver. Als Beispiel kann eine Transceiver-Schaltung 114 einen oder mehrere Verstärker (z.B. Leistungsverstärker, rauscharme Verstärker) aufweisen, um ein mittels der zugehörigen Antenne empfangenes oder zu sendendes Signal zu verstärken. Als weiteres Beispiel kann eine Transceiver-Schaltung 114 einen oder mehrere Frequenzwandler aufweisen, z.B. um die Frequenz eines empfangenen Signals aus dem Funkfrequenzbereich in einen Basisbandbereich umzuwandeln oder die Frequenz eines zu sendenden Signals aus dem Basisbandbereich in einen Funkfrequenzbereich umzuwandeln. Als weiteres Beispiel kann eine Transceiver-Schaltung 114 einen oder mehrere Filter und Mischer aufweisen, um eine gewünschte Frequenz oder einen gewünschten Frequenzbereich zum Senden/Empfangen von Funksignalen auszuwählen.

Im Allgemeinen können die Kommunikationsschnittstellen 110 (und dementsprechend die Transceiver-Schaltungen 114) gemäß derselben Kommunikationstechnologie eingerichtet werden. In einer anderen beispielhaften Konfiguration kann die Vorrichtung 102, 104 jedoch so eingerichtet sein, dass sie mit mehr als einer Kommunikationstechnologie kommuniziert, so dass die Kommunikationsschnittstellen 110 (und der Prozessor 106) getrennte Elemente (z.B. getrennte Sätze von Transceiver-Schaltungen 114) aufweisen können, die für die verschiedenen Kommunikationstechnologien eingerichtet sind.

Der Prozessor 106 kann zur Signalverarbeitung eingerichtet sein, um das Senden/Empfangen von Daten 112 mittels der Kommunikationsschnittstellen 110 zu ermöglichen. Als Beispiel für eine drahtlose Kommunikation kann der Prozessor 106 ein Basisbandmodem aufweisen (in diesem Szenario kann das Basismodem die Funktionen der Kommunikationsschnittstelle 110 bzw. Transceiver-Schaltungen 114 implementieren). Als weiteres Beispiel kann der Prozessor 106 ohne Basismodem vorgesehen sein und kann aber eingerichtet sein, um die Kommunikationsschnittstellen 110 bzw. die Transceiver-Schaltungen 114 gemäß Kodierung, Zeitplanung, Multiplexing usw. zu steuern, wie sie in den entsprechenden Kommunikationsprotokollen definiert sind. Im Allgemeinen kann der Prozessor 106 so eingerichtet sein, dass er die Verarbeitung auf verschiedenen Ebenen durchführt, z.B. auf der physikalischen Ebene, der Datenverbindungsebene, der Netzwerkebene usw., bis hin zur Anwendungsebene. In einer anderen beispielhaften Konfiguration, kann jedes Modem (wie beispielsweise ein WLAN-Dongle) einen Transceiver mit einem eigenen Prozessor aufweisen, welcher die physikalische Schicht bis zur Netzwerkebene abdeckt.

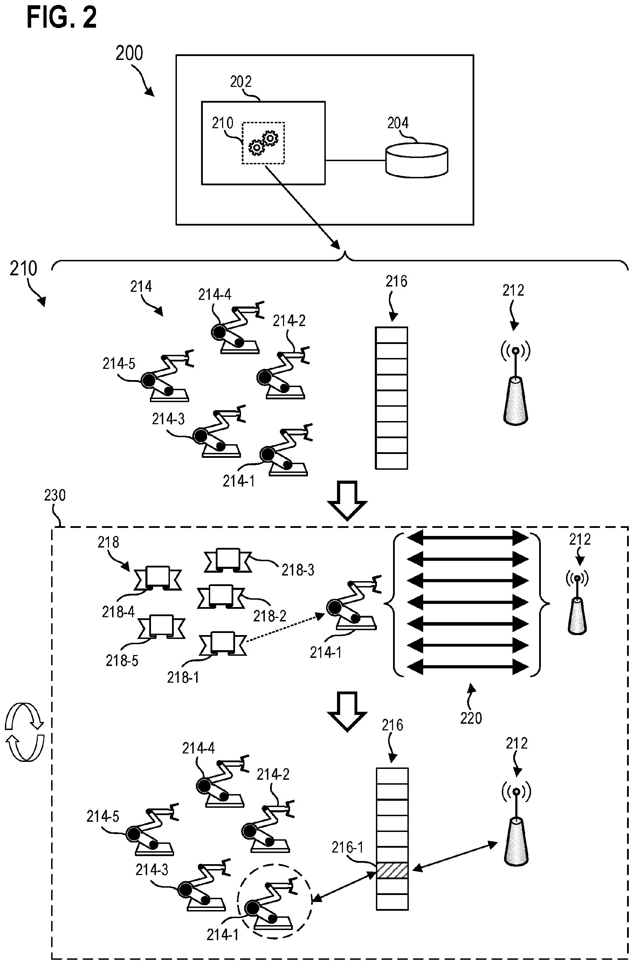

FIG.1A und FIG.1B zeigen einen allgemeinen beispielhaften Kontext, in dem die hierin vorgeschlagene Kommunikationsstrategie implementiert werden kann. Eine solche Kommunikationsstrategie wird in Bezug auf die FIG.2 bis FIG.6 im Detail beschrieben. Wie bereits erwähnt, ist die Anwendung der Kommunikationsstrategie jedoch nicht auf ein Netzwerk, wie es in FIG.1A dargestellt ist, oder auf Vorrichtungen, die wie in FIG.1A und FIG.1B eingerichtet sind, beschränkt, sondern kann generell in jedem geeigneten Kommunikationsszenario angewendet werden, um eine hohe Zuverlässigkeit zu erreichen.

**FIG.2** zeigt einen Netzwerk-Manager 200 in einer schematischen Ansicht gemäß verschiedener Aspekte. Der Netzwerk-Manager 200 kann einen Prozessor 202 und einen Speicher 204 aufweisen, der mit dem Prozessor 202 gekoppelt ist. Der Speicher 204 kann eingerichtet sein, um Anweisungen (z.B. Softwareanweisungen) zu speichern, die von dem Prozessor 202 ausgeführt werden. Die Anweisungen können den Prozessor 202 veranlassen, ein angepasstes Ressourcenzuordnungsverfahren 210 durchzuführen, das unten noch detaillierter beschrieben wird. Aspekte, die in Bezug auf eine Konfiguration des Prozessors 202 beschrieben sind, können auch für das Verfahren 210 gelten und umgekehrt. Ein Netzwerk-Manager kann hierin auch als Ressourcen-Zuordner oder Ressourcen-Verteiler bezeichnet werden.

Im Allgemeinen kann der Netzwerk-Manager 200 eine dedizierte Vorrichtung in einem Kommunikationsnetzwerk (z.B. im Kommunikationsnetzwerk 100) sein. Beispielsweise kann sich der Netzwerk-Manager 200 physisch im Kommunikationsnetzwerk befinden, z.B. im LAN oder WLAN, oder er kann sich an einem anderen Ort befinden (anschaulich in der "Cloud") und kommunikativ mit den Netzwerkteilnehmern gekoppelt sein. In einer anderen Konfiguration können die Funktionen des Netzwerk-Managers 200 jedoch von einer der an der Kommunikation beteiligten Vorrichtungen implementiert werden, z.B. von der Netzwerk-Vorrichtung 212.

Der Netzwerk-Manager 200 kann gemäß dem Verfahren 210 eingerichtet sein zum Steuern (z.B. zum Anweisen) einer Zuordnung von spektralen Ressourcen 216 zwischen einer Vielzahl von Client-Vorrichtungen 214 zur Kommunikation mit einer Netzwerk-Vorrichtung 212. Im Allgemeinen kann das Verfahren 210 für jede Art von Client-Vorrichtungen 214 und Netzwerk-Vorrichtungen 212 angewendet werden. Als Beispiel kann die Netzwerk-Vorrichtung 212 wie die erste Vorrichtung 102 eingerichtet sein, und die Client-Vorrichtungen 214 können wie die zweite Vorrichtung 104 eingerichtet sein, die in Bezug auf FIG.1A und FIG.1B beschrieben wurden. In einer beispielhaften Konfiguration können die Netzwerk-Vorrichtung 212 eine Basisstation (z.B. ein Controller) und eine Client-Vorrichtung 214 eine automatisierte Maschine (z.B. ein Aktor) sein. In einer beispielhaften Konfiguration kann die Basisstation 212 den Netzwerk-Manager 200 aufweisen oder so eingerichtet sein, dass sie die Funktion des Netzwerk-Managers implementiert.

In der beispielhaften Konfiguration in FIG.2A ist ein System dargestellt, das fünf Client-Vorrichtungen 214-1...214-5 aufweist. Es versteht sich jedoch, dass die hierin beschriebene Strategie in Szenarien angewandt werden kann, die eine beliebige geeignete Anzahl von Client-Vorrichtungen 214 aufweisen, z.B. zwei, drei, vier, fünf, zehn oder mehr als zehn. Es versteht sich auch, dass das System im Allgemeinen mehr als eine Netzwerk-Vorrichtung 212 aufweisen kann, und der Netzwerk-Manager 200 kann eingerichtet sein, um die Zuordnung der spektralen Ressourcen 216 für die Kommunikation der Client-Vorrichtungen 214 mit jeder der Netzwerk-Vorrichtungen 212 zu steuern.

Anschaulich kann der Netzwerk-Manager 200 eingerichtet sein zum Zuordnen an jede Client-Vorrichtung 214 einer oder mehrerer spektralen Ressourcen 216, mittels derer die Client-Vorrichtung 214 mit der Netzwerk-Vorrichtung 212 kommunizieren kann (z.B. Daten mit der Netzwerk-Vorrichtung 212 austauschen kann). Der Netzwerk-Manager 200 kann somit eingerichtet sein zum Definieren, wie die für die Kommunikation mit der Netzwerk-Vorrichtung 212 verfügbaren spektralen Ressourcen 216 auf die Client-Vorrichtungen 214 verteilt werden können.

Wie oben erwähnt, kann eine spektrale Ressource 216 ein Abschnitt des Frequenzspektrums sein oder aufweisen, der für die Kommunikation mit der Netzwerk-Vorrichtung 212 verfügbar ist, z.B. ein Abschnitt des Frequenzspektrums, in dem die Netzwerk-Vorrichtung 212 Signale (z.B. Funksignale) empfangen/übertragen kann. Der Netzwerk-Manager 200 kann somit eingerichtet sein zum Definieren einer Zuordnung der verfügbaren Abschnitte des Frequenzspektrums zu den Client-Vorrichtungen 214.

Die Zuordnung der spektralen Ressourcen 216 kann angepasst sein, um einen zuverlässigen Betrieb des Netzwerkes zu gewährleisten, z.B. kann die Zuordnung eingerichtet sein, um die Möglichkeit eines Ausfalls einer der Client-Vorrichtungen 214 zu reduzieren (z.B. zu minimieren). Anschaulich kann die Zuordnung eingerichtet sein, um die Möglichkeit zu verringern (z.B. zu minimieren), dass eine Client-Vorrichtung 214 nicht mit der Netzwerk-Vorrichtung 212 kommunizieren kann (z.B. aufgrund einer übermäßig verschlechterten Qualität der Kommunikation). Die hierin beschriebene Strategie kann somit einen stabilen und zuverlässigen Betrieb der einzelnen Client-Vorrichtungen 214 sowie des Systems als Ganzes gewährleisten. Gemäß verschiedenen Aspekten kann die Zuordnung gemäß einem Max-Min-Kriterium eingerichtet werden, das auf der Maximierung der Kommunikationsqualität für die Client-Vorrichtung mit den schlechtesten Kommunikationsbedingungen basiert.

Eine Ressourcenzuordnung gemäß dem Max-Min-Kriterium kann die Qualität der Kommunikation (z.B. das Signal-Rausch-Verhältnis) des schwächsten Benutzers im System maximieren. Der schwächste Benutzer in Bezug auf das aktuelle Zeitfenster (auch als Zeitschlitz bezeichnet) kann jedoch in Abhängigkeit von den jeweiligen Kanalrealisierungen der dem Benutzer zugewiesenen Ressourcen ermittelt werden, die wiederum von der Zuordnung abhängen können. In Anbetracht einer solchen zirkulären Abhängigkeit kann der Prozessor 202 eingerichtet sein zum Durchführen einer iterativen Zuordnungsprozedur 230. Anschaulich kann der Prozessor 202 eingerichtet sein zum Durchführen der iterativen Zuordnungsprozedur 230, um jeder Client-Vorrichtung 214 eine oder mehrere spektrale Ressourcen 216 zuzuordnen, die für eine Kommunikation mit der Netzwerk-Vorrichtung 212 verfügbar sind. Die Zuordnungsprozedur 230 kann auch als Zuordnungsverfahren, Allokationsprozedur oder Zuweisungsprozedur bezeichnet werden.

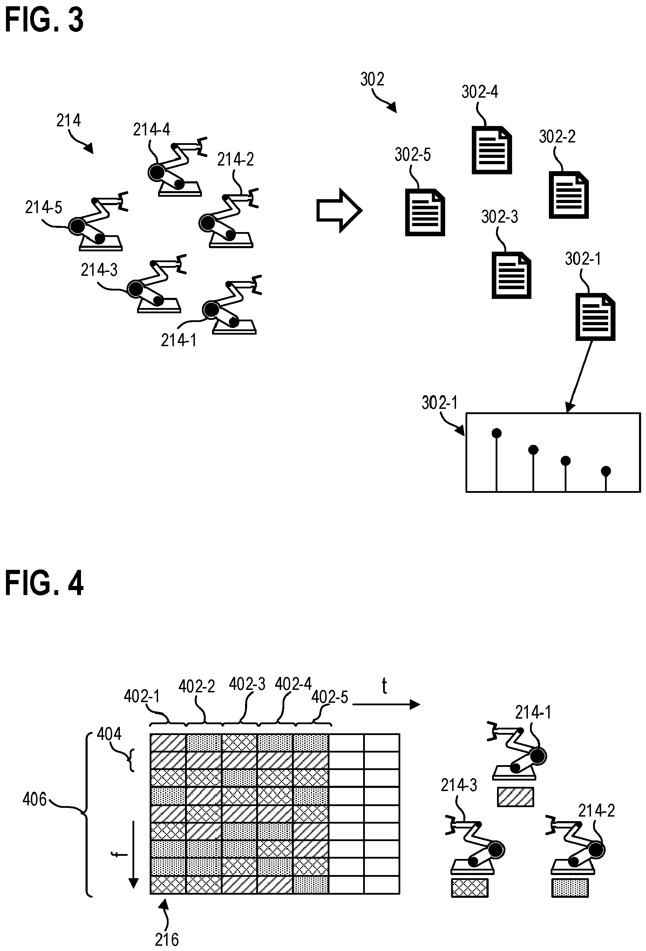

Die iterative Zuordnungsprozedur 230 kann mindestens eine Iteration, z.B. eine Vielzahl von Iterationen, aufweisen. Eine Iteration kann hierin auch als Instanz (z.B. Zuordnungsinstanz) oder Wiederholung bezeichnet werden. Der Prozessor 202 kann eingerichtet sein, um eine der verfügbaren spektralen Ressourcen 216 einer der Client-Vorrichtungen 214 in jeder Iteration zuzuordnen, wie unten noch weiter detailliert beschrieben. Gemäß verschiedenen Aspekten kann der Prozessor 202 so eingerichtet sein, dass er eine Zuordnungsprozedur 230 (anschaulich, alle Iterationen) während eines vorbestimmten Zeitfensters (siehe auch FIG.4), z.B. einer vorbestimmten Zeitperiode, abschließt. Der Prozessor 202 kann eingerichtet sein, um dann eine weitere Zuordnungsprozedur 230 in einem weiteren Zeitfenster durchzuführen, usw.

Der Prozessor 202 eingerichtet sein zum Ermitteln (oder zum Empfangen), in jeder Iteration, einer Vielzahl von Qualitätsfaktoren 218, die mit der Vielzahl von Client-Vorrichtungen 214 assoziiert sind. Anschaulich kann der Prozessor 202 eingerichtet sein zum Ermitteln eines jeweiligen Qualitätsfaktors 218 für jede der Client-Vorrichtungen 214 (z.B. erster bis fünfter Qualitätsfaktor 218-1...218-5 in dem Beispielszenario von FIG.2A). In dem beispielhaften Szenario mit mehreren Netzwerk-Vorrichtungen 212, kann der Prozessor 202 eingerichtet sein zum Ermitteln für jede Client-Vorrichtung 214 eine Vielzahl von Qualitätsfaktoren, anschaulich einen Qualitätsfaktor für jede Client-Netzwerk-Kombination.

Ein Qualitätsfaktor 218 kann eine Qualität der Kommunikation der jeweiligen Client-Vorrichtung 214 repräsentieren (z.B. während des aktuellen Zeitfensters). Ein Qualitätsfaktor 218 kann eine Gesamtqualität repräsentieren, mit der die Client-Vorrichtung 214 die verfügbaren spektralen Ressourcen 216 nutzen kann. Gemäß verschiedenen Aspekten kann ein Qualitätsfaktor 218 einer Client-Vorrichtung 214 eine Kommunikationsqualität einer oder mehrerer Kanalrealisierungen 220 zwischen der Client-Vorrichtung 214 und der Netzwerk-Vorrichtung 212 repräsentieren (wie beispielhaft in FIG.2A für eine erste Client-Vorrichtung 214-1 gezeigt).

Anschaulich kann eine Kanalrealisierung 220 zwischen einer Client-Vorrichtung 214 und der Netzwerk-Vorrichtung 212 ein Kommunikationspfad (anders ausgedrückt, ein Ausbreitungspfad) für eine jeweilige spektrale Ressource 216 sein oder aufweisen. Eine Kanalrealisierung 220 kann also ein Kommunikationspfad in einem entsprechenden Abschnitt des Frequenzspektrums sein oder aufweisen, z.B. ein Kommunikationspfad, über den Signale in einem entsprechenden Frequenzbereich gesendet/empfangen werden. Eine Kanalrealisierung 220 kann somit einen tatsächlichen Kommunikationspfad (eine tatsächliche Kommunikationsverbindung) zwischen einer Client-Vorrichtung 214 und der Netzwerk-Vorrichtung 212 repräsentieren, z.B. in Bezug auf eine entsprechende spektrale Ressource 216, z.B. in einem entsprechenden Frequenzbereich.

Ein Qualitätsfaktor 218 einer Client-Vorrichtung 214 kann somit eine Gesamtqualität der verfügbaren Kanalrealisierungen 220 zwischen der Client-Vorrichtung 214 und der Netzwerk-Vorrichtung 212 repräsentieren.

Anschaulich kann der Qualitätsfaktor 218 eine Qualität der verfügbaren Kommunikationswege zwischen der Client-Vorrichtung 214 und der Netzwerk-Vorrichtung 212 für die verfügbaren spektralen Ressourcen 216 repräsentieren.

Als Beispiel kann ein Qualitätsfaktor 218 eine Qualität der Kommunikation für eine Client-Vorrichtung 214 in Bezug auf die noch nicht zugeordneten spektralen Ressourcen 216 (z.B. während des aktuellen Zeitfensters) repräsentieren. Anschaulich kann der Qualitätsfaktor 218 in dieser Konfiguration eine Qualität repräsentieren, mit der die jeweilige Client-Vorrichtung 214 die noch freien (noch nicht zugeordneten) spektralen Ressourcen 216 nutzen kann.

Als weiteres Beispiel, das einen ressourcenintensiveren, aber umfassenderen Ansatz bieten kann, kann ein Qualitätsfaktor 218 eine Qualität der Kommunikation für eine Client-Vorrichtung 214 in Bezug auf alle verfügbaren spektralen Ressourcen 216 für die Kommunikation mit der Netzwerk-Vorrichtung 212 repräsentieren, unabhängig davon, ob die spektralen Ressourcen 216 bereits zugeordnet wurden (z.B. während des aktuellen Zeitfensters). Anschaulich kann in dieser Konfiguration der Qualitätsfaktor 218 eine Qualität repräsentieren, mit der die jeweilige Client-Vorrichtung 214 alle prinzipiell verfügbaren (sowohl "aktiven" als auch "inaktiven") spektralen Ressourcen 216 nutzen kann.

Es kann verschiedene Möglichkeiten geben, einen Qualitätsfaktor 218 auszudrücken, z.B. verschiedene Möglichkeiten, eine allgemeine Ressourcenqualität (oder Kanalqualität) einer Client-Vorrichtung 214 zu repräsentieren. Im Folgenden werden drei Beispiele angeführt, die ein effizientes Verständnis des Kommunikationsszenarios einer Client-Vorrichtung 214 ermöglichen. Es versteht sich jedoch, dass prinzipiell auch andere Möglichkeiten zur Darstellung eines Qualitätsfaktors 218 vorgesehen werden können.

Als Beispiel, das einen einfachen Hinweis auf die Kommunikationsbedingungen geben kann, kann der Qualitätsfaktor 218 einer Client-Vorrichtung 214 der größten Kanalqualität unter den Kanalqualitäten der Kanalrealisierungen 220 zwischen der Client-Vorrichtung 214 und einer Netzwerk-Vorrichtung 212 entsprechen. Anschaulich kann in dieser Konfiguration nur eine Kanalrealisierung 220 für jede Vorrichtung in Betracht gezogen werden, also nur eine spektrale Ressource 216. Zum Beispiel kann der Qualitätsfaktor 218 einer Client-Vorrichtung 214 das größte Signal-Rausch-Verhältnis unter den Signal-Rausch-Verhältnissen der Kanalrealisierungen 220 zwischen der Client-Vorrichtung 214 und der Netzwerk-Vorrichtung 212 sein oder diesem entsprechen.

Als weiteres Beispiel, das eine genauere Repräsentation des Gesamtzustandes eines Benutzers im Vergleich zum "Einzelkanal"-Szenario liefern kann, können mehr als eine Kanalrealisierung 220 in Betracht gezogen werden. In dieser Konfiguration kann der Qualitätsfaktor 218 einer Client-Vorrichtung 214 eine Kombination aus einer Teilmenge der Kanalqualitäten der Kanalrealisierungen 220 zwischen der Client-Vorrichtung 214 und der Netzwerk-Vorrichtung 212 aufweisen oder dieser entsprechen.

In diesem Szenario kann der Qualitätsfaktor 218 einer Client-Vorrichtung 214 also mehr als eine Kanalrealisierung 220 repräsentieren. Beispielsweise kann der Qualitätsfaktor 218 einer Client-Vorrichtung 214 für eine Anzahl N von Kanalrealisierungen 220 repräsentativ sein, wobei N kleiner ist als die Gesamtzahl der Kanalrealisierungen 220 zwischen der Client-Vorrichtung 214 und der Netzwerk-Vorrichtung 212. Im Allgemeinen kann der Qualitätsfaktor 218 eine Gesamtqualität der besten Kanalrealisierungen 220 repräsentieren, die für die Client-Vorrichtung 214 verfügbar sind, z.B. basierend auf der Annahme, dass diese Kanalrealisierungen 220 für die Kommunikation am relevantesten sind.

Zum Beispiel kann die Teilmenge der Kanalqualitäten die größte Kanalqualität, die zweitgrößte Kanalqualität, die drittgrößte Kanalqualität usw. bis zur N-ten größten Kanalqualität unter den Kanalqualitäten der Kanalrealisierungen 220 der Client-Vorrichtung 214 aufweisen. Ein Qualitätsfaktor 218, der auf einer Kombination (z.B. einer Summe) solcher Kanalqualitäten basiert, kann das Szenario für die Client-Vorrichtung 214 im Vergleich zur "Ein-Kanal"-Konfiguration genauer repräsentieren.

Zum Beispiel kann der Qualitätsfaktor 218 in dieser Konfiguration eine Summe der Signal-Rausch-Verhältnisse der entsprechenden Kanalrealisierungen 220 sein oder aufweisen, die in der Teilmenge berücksichtigt werden. Als Beispiel kann der Qualitätsfaktor 218 eine Summe des größten Signal-Rausch-Verhältnisses, des zweitgrößten Signal-Rausch-Verhältnisses usw. sein oder aufweisen, bis zum N-ten größten Signal-Rausch-Verhältnis. Allgemein können die Werte der Signal-Rausch-Verhältnisse im linearen Bereich verrechnet werden (anschaulich, gemäß einer linearen Skala), was eine einfache Verrechnung (Summe oder Produkt) ermöglicht.

Die Anzahl N der zu berücksichtigenden Kanalrealisierungen 220 kann in Abhängigkeit von der gewünschten Funktionsweise des Systems gewählt werden. Ein höheres N kann eine umfassendere Sicht auf das Kommunikationsszenario einer Client-Vorrichtung 214 bieten, während ein kleineres N eine einfachere Analyse und Zuordnung ermöglichen kann. Als numerisches Beispiel kann die Zahl N gleich oder größer als 2 sein, z.B. gleich oder größer als 5. Als weiteres Beispiel kann die Anzahl N mindestens 25% aller verfügbaren Kanalrealisierungen 220 für eine Client-Vorrichtung 214 aufweisen, z.B. mindestens 50%, z.B. mindestens 75%. In einer bevorzugten Konfiguration, die hinsichtlich der Effizienz der Zuordnung ein optimales Ergebnis erbringen kann, kann die Zahl N von der maximalen Anzahl der zuzuordnenden Ressourcen pro Client-Vorrichtung abhängen. Beispielsweise kann die Anzahl N zwischen 100% und 150% der maximalen Anzahl der zuzuordnenden Ressourcen pro Client-Vorrichtung sein.

Im Allgemeinen kann die Anzahl N der zu berücksichtigenden Kanalrealisierungen 220 für jede Client-Vorrichtung 214 die gleiche sein. In einigen Aspekten kann jedoch eine unterschiedliche Anzahl von Kanalrealisierungen 220 für verschiedene Client-Vorrichtungen 214 in Betracht gezogen werden, z.B. unter Berücksichtigung anderer Faktoren, wie der Nähe zur Netzwerk-Vorrichtung 212, der Relevanz der von der Client-Vorrichtung 214 durchzuführenden Operation und dergleichen.

Als weiteres Beispiel, das eine empfindlichere Schätzung des Kommunikationsszenarios einer Client-Vorrichtung 214 ermöglichen kann, kann der Qualitätsfaktor 218 ein Produkt sein oder aufweisen. In einer solchen Konfiguration kann der Qualitätsfaktor 218 einer Client-Vorrichtung 214 ein Produkt aus einem ersten Faktor und einem zweiten Faktor aufweisen. Der erste Faktor kann die größte Kanalqualität unter Kanalqualitäten der Kanalrealisierungen 220 zwischen der Client-Vorrichtung 214 und der Netzwerk-Vorrichtung 212 aufweisen. Der zweite Faktor kann die N-te größte Kanalqualität unter Kanalqualitäten der Kanalrealisierungen 220 zwischen der Client-Vorrichtung 214 und der Netzwerk-Vorrichtung 212 aufweisen.

In dieser Konfiguration kann der Qualitätsfaktor 218 empfindlicher auf Schwankungen in der Qualität der Kommunikation über die Kanalrealisierungen 220 reagieren. Zum Beispiel kann der erste Faktor das größte Signal-Rausch-Verhältnis unter den Kanalrealisierungen 220 der Client-Vorrichtung 214 aufweisen, und der zweite Faktor kann das N-te größte Signal-Rausch-Verhältnis unter den Kanalrealisierungen 220 der Client-Vorrichtung 214 aufweisen Anschaulich werden in dieser Konfiguration zwei Werte berücksichtigt, und zwar der beste (größte) Wert und ein weiterer Wert (der N-te Wert). Als Beispiel kann der weitere Wert die zweitbeste Kanalqualität sein (z.B. das zweitgrößte Signal-Rausch-Verhältnis). Als weiteres Beispiel kann der weitere Wert die schlechteste Kanalqualität (z.B. das niedrigste Signal-Rausch-Verhältnis) für die Client-Vorrichtung aufweisen. Allgemein kann der weitere Wert der Wert in Position "N" (z.B. in einer Präferenzliste der Client-Vorrichtung), wobei N kann ausgewählt werden, basierend auf den oben beschriebenen Überlegungen.

Der Prozessor 202 kann eingerichtet sein, in jeder Iteration, zum Zuordnen einer der verfügbaren (und noch nicht zugeordneten) spektralen Ressourcen 216 einer der Client-Vorrichtung 214 auf der Grundlage der ermittelten (oder empfangenen) Qualitätsfaktoren 218. Gemäß der hierin beschriebenen angepassten Strategie kann der Prozessor 202 eingerichtet sein zum Zuordnen einer der verfügbaren (und noch nicht zugeordneten) spektralen Ressourcen 216 der Client-Vorrichtung 214, welche den niedrigsten damit assoziierten Qualitätsfaktor 218 aufweist (z.B. das niedrigste Signal-Rausch-Verhältnis in den entsprechenden Kanalrealisierungen 220). Anschaulich kann der Prozessor 202 so eingerichtet sein, dass er der Client-Vorrichtung 214 mit dem niedrigsten Qualitätsfaktor 218 in der aktuellen Iteration eine spektrale Ressource 216 (z.B. einen Unterkanal) zuweist.

Dies kann dazu führen, dass während jeder Iteration die Client-Vorrichtung 214 mit den insgesamt schlechtesten Kommunikationsbedingungen bedient wird und ihr eine spektrale Ressource 216 vor den anderen Client-Vorrichtungen 214 zugeordnet wird. Dieser Ansatz kann auf der Erkenntnis beruhen, dass es weniger kritisch sein kann, Client-Vorrichtungen 214 mit guter Kommunikationsqualität (z.B. Kanalrealisierungen 220 mit hoher Qualität, z.B. mit geringem Rauschen, geringer Interferenz usw.) spektrale Ressourcen 216 zuzuordnen, da die Gesamtzuverlässigkeit des Systems durch solche Vorrichtungen nur schwach beeinflusst werden kann. Als Beispiel ist in FIG.2 die Zuordnung einer ersten spektralen Ressource 216-1 zu der ersten Client-Vorrichtung 214-1 gezeigt.

Gemäß verschiedener Aspekte kann der Prozessor 202 eingerichtet sein zum Auswählen, welche der verfügbaren (und noch nicht zugeordneten) spektralen Ressourcen 216 der Client-Vorrichtung 214-1 mit dem niedrigsten Qualitätsfaktor 218-1 zugewiesen werden sollen, um einen zuverlässigen Betrieb des Systems zu gewährleisten. In einer beispielhaften Konfiguration, die einen einfachen, aber effizienten Ansatz bietet, kann der Prozessor 202 derart eingerichtet sein, dass er der Client-Vorrichtung 214-1 mit dem niedrigsten Qualitätsfaktor 218-1 diejenige spektrale Ressource 216 zuordnet, für die die entsprechende Kanalrealisierung 220 die größte Qualität, z.B. das größte Signal-Rausch-Verhältnis, aufweist. Diese Zuordnung sorgt dafür, dass der schwächste Benutzer seine bevorzugte spektrale Ressource 216-1 (z.B. seinen bevorzugten Kanal oder Unterkanal) zugeordnet bekommt, wodurch die Zuverlässigkeit für diesen Benutzer maximiert wird.

Der Prozessor 202 kann ferner eingerichtet sein zum Durchführen weiterer Iterationen der Zuordnungsprozedur 230, um den Client-Vorrichtungen 214 weitere (verbleibende) spektrale Ressourcen 216 zuzuordnen. In jeder Iteration kann der Prozessor 202 die Qualitätsfaktoren 218 berücksichtigen, die in der ersten Iteration des Verfahrens 230 ermittelt wurden, oder, in anderen Aspekten, kann der Prozessor 202 eingerichtet sein, um in jeder Iteration neue (aktualisierte) Qualitätsfaktoren 218 zu ermitteln. Die Aktualisierung der Qualitätsfaktoren 218 kann einen ressourcenintensiveren, aber genaueren Zuordnungsprozess ermöglichen.

Anschaulich kann der Prozessor 202 eingerichtet sein zum Zuordnen, in einer zweiten Iteration der Zuordnungsprozedur 230, einer weiteren (noch nicht zugeordneten) spektralen Ressource 216 einer weiteren (zweiten) Client-Vorrichtung 214, die den niedrigsten Qualitätsfaktor 218 für diese Iteration aufweist. In einer dritten Iteration der Zuordnungsprozedur 230 kann der Prozessor 202 eine weitere (noch nicht zugeordnete) spektrale Ressource 216 einer weiteren (dritten) Client-Vorrichtung 214 zuordnen, die den niedrigsten Qualitätsfaktor 218 für diese Iteration aufweist, usw.

Im Allgemeinen können die Zuordnungen, die in verschiedenen Iterationen erfolgen, unabhängig voneinander sein. So kann der Prozessor 202 in einer Iteration die entsprechende spektrale Ressource 216 einer Client-Vorrichtung 214 zuweisen, der bereits eine oder mehrere spektrale Ressourcen 216 zugeordnet wurden, oder einer Client-Vorrichtung 214, der noch keine spektralen Ressourcen 216 zugeordnet wurden.

In einer beispielhaften Konfiguration kann der Prozessor 202 derart eingerichtet sein, dass er jeder Client-Vorrichtung 214 mindestens eine spektrale Ressource 216 zuordnet, bevor er Client-Vorrichtungen 214, denen bereits eine spektrale Ressource 216 zugeordnet wurde, weitere spektrale Ressourcen 216 zuordnet. Auf diese Weise können die Client-Vorrichtungen 214 schneller in die Lage versetzt werden, z.B. eine jeweilige Operation durchzuführen. In dieser Konfiguration kann der Prozessor 202 eingerichtet sein, um für die Zuordnung während einer Iteration die Client-Vorrichtung zu ignorieren, an welche die spektrale Ressource 216 in der früheren Zuordnungsiteration zugeordnet wurde. Allgemeiner kann der Prozessor 202 derart eingerichtet sein, dass er bei der Zuordnung während einer Iteration die Client-Vorrichtungen ignoriert, die bereits eine zugeordnete spektrale Ressource 216 haben, wenn es Client-Vorrichtungen 214 ohne zugeordnete spektrale Ressource 216 gibt.

In einer anderen beispielhaften Konfiguration kann der Prozessor 202 eingerichtet sein, um die spektralen Ressourcen 216 unabhängig davon zuzuordnen, ob eine oder mehrere Client-Vorrichtungen 214 keine zugeordnete spektrale Ressource 216 haben. So kann in diesem Szenario einer Client-Vorrichtung 214 eine Vielzahl von spektralen Ressourcen 216 zugeordnet werden, bevor eine andere Client-Vorrichtung 214 ihre erste spektrale Ressource 216 zugeordnet bekommt. Dieser Ansatz bietet eine günstigere Zuordnung für die schwächeren Benutzer und kann somit eine insgesamt zuverlässigere Kommunikation gewährleisten.

Wie oben erwähnt, kann einer Client-Vorrichtung 214 mehr als eine spektrale Ressource 216 zugeordnet werden (z.B. während eines Zeitfensters). Anschaulich kann der Prozessor 202 eingerichtet sein, um in mindestens einer Iteration der Zuordnungsprozedur 230 eine spektrale Ressource 216 einer Client-Vorrichtung 214 zuzuordnen, der bereits eine andere spektrale Ressource 216 in einer der vorangegangenen Iterationen zugeordnet wurde. Am Ende der Zuordnungsprozedur 230 kann mindestens eine Client-Vorrichtung 214 (oder mehr als eine Client-Vorrichtung 214 oder jede Client-Vorrichtung 214) eine Vielzahl von zugeordneten spektralen Ressourcen 216 haben.

Gemäß verschiedenen Aspekten kann der Prozessor 202 derart eingerichtet sein, dass er Iterationen der Zuordnungsprozedur 230 durchführt, bis jeder Client-Vorrichtung 214 mindestens eine spektrale Ressource 216 zugeordnet ist. In einer beispielhaften Konfiguration kann jede Client-Vorrichtung 214 mit einer maximalen Anzahl von spektralen Ressourcen 216 assoziiert sein, die der Client-Vorrichtung 214 zugeordnet werden können. Anschaulich kann jede Client-Vorrichtung 214 eine Begrenzung der Anzahl der spektralen Ressourcen 216 haben, die die Client-Vorrichtung 214 während eines Zuweisungsverfahrens 230 erhalten kann.

Die maximale Anzahl der spektralen Ressourcen 216, die einer Client-Vorrichtung 214 zugeordnet werden können, kann je nach dem gewünschten Betrieb der Client-Vorrichtung 214 variieren. Zum Beispiel kann sich die maximale Anzahl der spektralen Ressourcen 216 erhöhen, wenn die Client-Vorrichtung 214 eine große Bandbreite für ihren Betrieb benötigt, oder wenn die Client-Vorrichtung 214 große Datenmengen für ihren Betrieb austauschen muss. Als weiteres Beispiel kann die maximale Anzahl der spektralen Ressourcen 216 sinken, wenn die von der Client-Vorrichtung 214 durchgeführte Operation eine niedrige Priorität innerhalb des Netzwerks (z.B. innerhalb der Montagelinie) hat.

Die maximale Anzahl der spektralen Ressourcen 216 kann also zwischen den Client-Vorrichtungen 214 variieren. Zum Beispiel kann eine erste Client-Vorrichtung 214-1 eine erste maximale Anzahl M1 an spektralen Ressourcen 216 haben, die der ersten Client-Vorrichtung 214-1 zugeordnet werden können, eine zweite Client-Vorrichtung 214-2 kann eine zweite maximale Anzahl M2 an spektralen Ressourcen 216 haben, die der zweiten Client-Vorrichtung 214-2 zugeordnet werden können, usw. Die erste maximale Anzahl M1 kann sich von der zweiten maximalen Anzahl M2 unterscheiden. In einem anderen Beispiel kann die erste maximale Anzahl M1 gleich der zweiten maximalen Anzahl M2 sein. In verschiedenen Aspekten kann mindestens eine Client-Vorrichtung 214 eine maximale Anzahl von spektralen Ressourcen 216 haben, die der Client-Vorrichtung 214 zugeordnet werden können, die sich von der maximalen Anzahl von spektralen Ressourcen 216 unterscheidet, die einer anderen Client-Vorrichtung 214 zugeordnet werden können. In verschiedenen Aspekten kann mindestens eine Client-Vorrichtung 214 eine maximale Anzahl von spektralen Ressourcen 216 haben, die der Client-Gerät 214 zugeordnet werden können, die gleich der maximalen Anzahl von spektralen Ressourcen 216 ist, die einer anderen Client-Gerät 214 zugeordnet werden können.

Der Prozessor 202 kann derart eingerichtet sein, dass er (während der Zuordnungsprozedur 230) jeder Client-Vorrichtung 214 eine Anzahl von spektralen Ressourcen 216 zuordnet, die gleich oder kleiner ist als die jeweilige maximale Anzahl von spektralen Ressourcen 216, die der Client-Vorrichtung 214 zugeordnet werden können. In diesem Szenario kann der Prozessor 202 eingerichtet sein, in jeder Iteration eine Client-Vorrichtung für die Zuordnung der spektralen Ressourcen 216 zu ignorieren, falls der Client-Vorrichtung 214 eine Anzahl von spektralen Ressourcen 216 (bereits) zugeordnet wurde, die gleich der jeweiligen maximalen Anzahl von spektralen Ressourcen 216 ist, die der Client-Vorrichtung 214 zugeordnet werden können.

Unter Berücksichtigung der Begrenzung der Anzahl der spektralen Ressourcen 216, die jeder Client-Vorrichtung 214 zugeordnet werden können, kann die Zuordnungsprozedur 230 eine Anzahl von Iterationen haben, die gleich oder kleiner ist als $\sum_{i=1}^{U} R_i$ , wobei U die Anzahl der Client-Vorrichtungen 214 und $R_i$ die entsprechende maximale Anzahl der spektralen Ressourcen 216 ist, die der i-ten Client-Vorrichtung 214 zugeordnet werden können. Die hierin beschriebene Zuordnungsprozedur 230 ermöglicht es, die Zuordnung (mit hoher Zuverlässigkeit) mit einer Anzahl von Iterationen abzuschließen, die im Vergleich zu einer erschöpfenden Suche um Größenordnungen geringer ist. Anschaulich kann eine erschöpfende Suche das Aufstellen aller möglichen Zuordnungen von Ressourcen zu Nutzern und Bewerten der kombinierten Kanalqualität des schlechtesten Nutzers aufweisen.

Gemäß verschiedener Aspekte, zum Beispiel unter Berücksichtigung eines Fließbandszenarios, kann eine Client-Vorrichtung 214 Rückmeldedaten an die Netzwerk-Vorrichtung 212 mittels der zugeordneten spektralen Ressourcen 216 übertragen und/oder Anweisungen von der Netzwerk-Vorrichtung 212 mittels der zugeordneten spektralen Ressourcen 216 empfangen. Als Beispiel können die Anweisungen mit einer Aufgabe assoziiert sein, die von der Client-Vorrichtung 214 durchgeführt wird.

Weitere Aspekte der Ressourcen-Zuordnung werden im Zusammenhang mit FIG.3 bis FIG.6 noch detaillierter beschrieben.

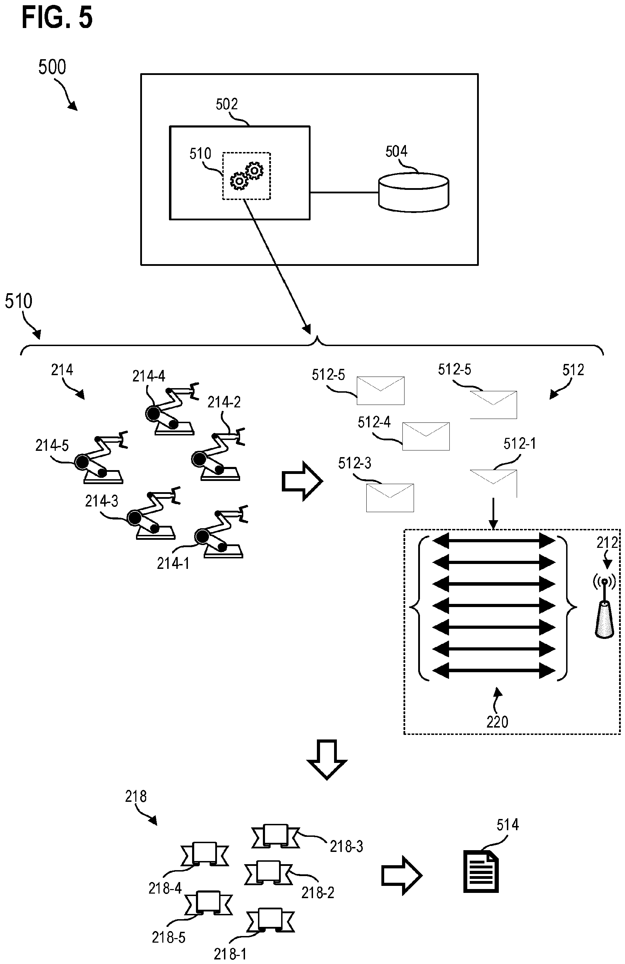

Gemäß verschiedenen Aspekten, wie in **FIG.3** gezeigt, kann der Prozessor 202 eingerichtet sein, um Präferenzlisten 302 zu generieren (oder zu empfangen, siehe auch FIG.5), die mit den Client-Vorrichtungen 214 assoziiert sind (z.B. erste bis fünfte Präferenzliste 302-1...302-5 in dem beispielhaften Szenario in FIG.3). Eine Präferenzliste 302 kann eine Kanalliste sein, die die Kanalrealisierungen 220 der entsprechenden Client-Vorrichtung 214 in der Reihenfolge ihrer Präferenz aufweist. Eine Präferenzliste 302 kann somit eine direkte und kompakte Repräsentation der von einer Client-Vorrichtung 214 bevorzugten spektralen Ressourcen 216 bieten.

Der Prozessor 202 kann eingerichtet sein, um in mindestens einer Iteration der Zuordnungsprozedur eine entsprechende Präferenzliste 302 für jede Client-Vorrichtung 214 zu ermitteln (z.B. zu generieren oder in einigen Aspekten zu empfangen). Der Prozessor 202 kann eingerichtet sein, um die Präferenzlisten 302 in jeder Iteration zu ermitteln, um ein dynamisches Verständnis dafür zu schaffen, wie die spektralen Ressourcen 216 zugeordnet werden sollten, oder einmalig (z.B. bei der ersten Iteration), um einen weniger ressourcenintensiven Zuordnungsprozess zu schaffen.

Eine Präferenzliste 302 einer Client-Vorrichtung 214 kann die jeweiligen Kanalrealisierungen 220 zwischen der Client-Vorrichtung 214 und der Netzwerk-Vorrichtung 212, geordnet nach Kanalqualität, aufweisen oder repräsentieren. Zum Beispiel kann eine Präferenzliste 302 die Kanalrealisierungen 220 geordnet nach abnehmender Kanalqualität aufweisen, wie in der beispielhaften Konfiguration in FIG.3 für die erste Präferenzliste 302-1 gezeigt. Diese Repräsentation kann direkt die bevorzugte Kanalrealisierung 220 (und dementsprechend die spektrale Ressource 216) für eine Client-Vorrichtung 214 anzeigen, anschaulich an der erste Position in der Liste. Es versteht sich jedoch, dass eine Präferenzliste 302 auch die nach einem anderen Kriterium geordneten Kanalrealisierungen 220 aufweisen kann, z.B. in aufsteigender Reihenfolge der Kanalqualität.

In einer beispielhaften Konfiguration, die einen einfachen, aber zuverlässigen Hinweis auf die Präferenzen einer Client-Vorrichtung 214 liefern kann, kann eine Präferenzliste 302 die Kanalrealisierungen 220 aufweisen, die nach dem Signal-Rausch-Verhältnis geordnet sind, z.B. geordnet nach abnehmendem Signal-Rausch-Verhältnis (oder, in anderen Aspekten, nach zunehmendem Signal-Rausch-Verhältnis).

Der Prozessor 202 kann eingerichtet sein, um in jeder Iteration eine spektrale Ressource 216 der Client-Vorrichtung 214 mit dem kleinsten Qualitätsfaktor 218 basierend auf der jeweiligen Präferenzliste 302 zuzuordnen. Anschaulich kann der Prozessor 202 eingerichtet sein, um der Client-Vorrichtung 214 die spektrale Ressource 216 zuzuordnen, die der bevorzugten Kanalrealisierung 220 in der jeweiligen Präferenzliste 302 entspricht (z.B. die erste, im Falle einer Reihenfolge nach abnehmender Kanalqualität).

Gemäß verschiedener Aspekte kann der Prozessor 202 eingerichtet sein, um eine Kanalrealisierung, die einer zugeordneten spektralen Ressource 216 entspricht, aus jeder Präferenzliste 302 zu entfernen. Dies kann dazu führen, dass in den Präferenzlisten 302 nur die Kanalrealisierungen 220 verbleiben, die den noch zuzuordnenden spektralen Ressourcen 216 entsprechen, wodurch die Zuordnungsprozedur 230 vereinfacht wird. Anschaulich kann der Prozessor 202 eingerichtet sein, nach der Zuordnung einer spektralen Ressource 216-1 zu einer Client-Vorrichtung 214-1 eingerichtet sein, um die dieser spektralen Ressource 216-1 entsprechende Kanalrealisierung 220 aus jeder Präferenzliste 302 der Client-Vorrichtungen 214 zu entfernen.

In diesem Szenario kann eine Präferenzliste 302 eine neu geordnete Menge (oder Teilmenge) der verfügbaren spektralen Ressourcen 216 repräsentieren (basierend auf den entsprechenden Kanalrealisierungen 220) und kann bei jeder Iteration kleiner werden, wenn die spektralen Ressourcen 216 zugeordnet werden. Bei Einleitung einer neuen Zuordnungsprozedur 230, z.B. in einem nachfolgenden Zeitfenster, kann der Prozessor 202 die (vollständigen) Präferenzlisten 302 für eine neue Zuordnungsprozedur 230 neu ermitteln (z.B. generieren oder empfangen).

Gemäß verschiedener Aspekte kann eine Präferenzliste 302 einer Client-Vorrichtung 214 zusätzlich oder alternativ berücksichtigt werden, um den Qualitätsfaktor 218 der Client-Vorrichtung zu ermitteln. Wie oben erwähnt, kann ein Qualitätsfaktor 218 eine Kombination (z.B. eine Summe) der Kanalqualitäten einer Teilmenge von Kanalrealisierungen 220 aufweisen oder repräsentieren, oder er kann ein Produkt sein. Unter Berücksichtigung von Präferenzlisten 302, in denen die Kanalrealisierungen 220 nach abnehmender Kanalqualität (z.B. abnehmendes Signal-Rausch-Verhältnis) geordnet sind, kann der Qualitätsfaktor 218 auf einer Kombination der ersten N Einträge der Präferenzliste 302 basieren. Entsprechend kann der Qualitätsfaktor 218 bei der Betrachtung von Präferenzlisten 302, in denen die Kanalrealisierungen 220 nach steigender Kanalqualität (z.B. steigendes Signal-Rausch-Verhältnis) geordnet sind, auf einer Kombination der letzten N Einträge der Präferenzliste 302 beruhen.

Wie oben erwähnt und in **FIG.4** gezeigt, kann der Prozessor 202 derart eingerichtet sein, dass er die Zuordnungsprozedur 230 innerhalb eines vorbestimmten Zeitfensters durchführt (und abschließt) und dann eine neue Zuordnungsprozedur in einem weiteren Zeitfenster startet. Dieses Szenario ist in FIG.4 für einen beispielhaften Fall mit drei Client-Vorrichtungen 214-1, 214-2, 214-3 und fünf Zeitfenstern 402-1...402-5 dargestellt, aber es versteht sich, dass die in Bezug auf FIG.4 beschriebenen Aspekte auf ein Szenario mit einer beliebigen geeigneten Anzahl von Zeitfenstern und einer beliebigen Anzahl von Client-Vorrichtungen 214 angewendet werden können.

Gemäß verschiedener Aspekte kann der Prozessor 202 derart eingerichtet sein, dass er die Zuordnungsprozedur 230 in vordefinierten Zeitfenstern wiederholen kann. Anschaulich kann der Prozessor 202 eingerichtet sein, um die Zuordnungsprozedur 230 innerhalb eines Zeitfensters 402-1 einzuleiten und abzuschließen und dann die Zuordnungsprozedur 230 in einem oder mehreren nachfolgenden Zeitfenstern 402-2...402-5 zu wiederholen.

Ein Zeitfenster kann als eine vorbestimmte Zeitspanne verstanden werden, in der jeder Client-Vorrichtung 214 mindestens eine spektrale Ressource 216 zugeordnet werden sollte. Die Dauer eines Zeitfensters kann gemäß dem gewünschten Betrieb des Netzwerkes gewählt werden. Nur als numerisches Beispiel kann ein Zeitfenster eine Dauer im Bereich von 1 ms bis 100 ms haben. Ein Zeitfenster kann hierin auch als Zuordnungszeitraum bezeichnet werden. Im Allgemeinen kann jede Client-Vorrichtung 214 jeden zugeordneten Zeitraum nutzen, um Daten mit der Netzwerk-Vorrichtung 212 auszutauschen.

In einigen Aspekten kann der Prozessor 202 derart eingerichtet sein, dass während jedes Zeitfenster jeder Client-Vorrichtung 214 mindestens eine spektrale Ressource 216 zugeordnet wird. Dies ist in FIG.4 für die drei Client-Vorrichtungen 214-1...214-3 gezeigt, von denen jede eine oder mehrere spektrale Ressourcen 216 (mittels einer entsprechenden Füllung gezeigt) während jedes der Zeitfenster 402-1...402-5 zugeordnet bekommt.

FIG.4 zeigt anschaulich die frequenzbezogenen Eigenschaften der spektralen Ressourcen 216 (entlang der vertikalen Achse in FIG.4). Im Allgemeinen kann jede spektrale Ressource 216 einen entsprechenden spektralen Bereich 404 abdecken (anschaulich) innerhalb einer vordefinierten Bandbreite 406 in dem Frequenzbereich, welcher für die Kommunikation mit der Netzwerk-Vorrichtung 212 verfügbar ist. Der spektrale Bereich 404 sowie die vordefinierten Bandbreite 406 (anschaulich, ein vordefiniertes Frequenzband) können in Abhängigkeit von der Kommunikationstechnologie gewählt werden, gemäß der die Client-Vorrichtungen 214 und Netzwerk-Vorrichtung 212 eingerichtet sind. Nur als ein Beispiel kann das Frequenzband das 2,4-GHz-Frequenzband oder das 3,7-GHz-Band oder das 5-GHz-Frequenzband oder das 6-GHz Frequenzband aufweisen.

Im Allgemeinen kann der spektrale Bereich für jede spektrale Ressource 216 die gleiche Breite haben (bei unterschiedlichen Unter- und Obergrenzen). Anschaulich können die spektralen Ressourcen 216 (z.B. Unterkanäle) die gleiche Bandbreite haben. Als ein Beispiel, kann ein erster spektraler Bereich einer ersten spektralen Ressource 216 eine erste Bandbreite haben und ein zweiter spektraler Bereich einer zweiten spektralen Ressource 216 kann eine zweite Bandbreite haben, die gleich der ersten Bandbreite ist. Nur als numerisches Beispiel kann die Bandbreite im Frequenzbereich einer spektralen Ressource 216 eine Breite im Bereich von 0,1 MHz bis 20 MHz haben, beispielsweise eine Breite von 2 MHz.

Eine Unterteilung der spektralen Ressourcen 216 in Frequenzbereiche gleicher Breite kann eine einfachere und reproduzierbare Zuordnung ermöglichen. Es versteht sich jedoch, dass die verschiedenen spektralen Ressourcen 216 prinzipiell unterschiedliche Bandbreiten haben können.

Gemäß verschiedener Aspekten können die spektralen Ressourcen 216, die für die Kommunikation zwischen einer Client-Vorrichtung 214 und der Netzwerk-Vorrichtung 214 zur Verfügung stehen, in Bezug auf die Frequenz orthogonal zueinander sein. Die Orthogonalität kann sicherstellen, dass Interferenzen zwischen verschiedenen Benutzern reduziert (oder eliminiert) werden.

Gemäß verschiedenen Aspekten kann die Bewertung der Kommunikationsqualität der Client-Vorrichtungen 214 auf Informationen basieren, die von den Client-Vorrichtungen 214 geliefert werden, wie in Bezug auf FIG.5 beschrieben.

**FIG.5** zeigt einen Netzwerk-Überwacher 500 in einer schematischen Ansicht, gemäß verschiedenen Aspekten. Der Netzwerk-Überwacher 500 kann einen Prozessor 502 und einen Speicher 504 aufweisen, der mit dem Prozessor 502 gekoppelt ist. Der Speicher 504 kann eingerichtet sein, um Anweisungen (z.B. Softwareanweisungen) zu speichern, die von dem Prozessor 502 ausgeführt werden. Die Anweisungen können den Prozessor 502 veranlassen, ein Verfahren 510 zur Überwachung der Kommunikationsqualität in einem Kommunikationsnetzwerk durchzuführen, das unten noch detaillierter beschrieben wird. Aspekte, die in Bezug auf eine Konfiguration des Prozessors 502 beschrieben sind, können auch für das Verfahren 510 gelten und umgekehrt.

Im Allgemeinen kann der Netzwerk-Überwacher 500 eine dedizierte Vorrichtung in einem Kommunikationsnetzwerk sein (z.B. im Kommunikationsnetzwerk 100). In einer anderen Konfiguration können die Funktionen des Netzwerk-Überwachers 500 jedoch von einer der an der Kommunikation beteiligten Vorrichtungen implementiert werden, z.B. von der Netzwerk-Vorrichtung 212. In einigen Aspekten können der Netzwerk-Überwacher 500 und der Netzwerk-Manager 200 in einer einzigen Vorrichtung kombiniert werden, die beide Funktionen durchführt (z.B. kann die Funktionalität des Prozessors 502 von dem Prozessor 202 durchgeführt werden und umgekehrt).

Zur Veranschaulichung kann der Netzwerk-Überwacher 500 eingerichtet sein zum Ermitteln der Qualitätsfaktoren für die Client-Vorrichtungen 214 des Kommunikationsnetzwerkes. In einigen Aspekten kann der Netzwerk-Überwacher 500 ferner eingerichtet sein zum Ermitteln (z.B. Erzeugen) der Präferenzlisten der Client-Vorrichtungen 214 des Kommunikationsnetzwerkes. Der Netzwerk-Überwacher 500 kann dann das Ergebnis seiner Operation verwenden, um den Client-Vorrichtungen 214 spektrale Ressourcen 216 zuzuordnen, oder er kann das Ergebnis seiner Operation an einen Netzwerk-Manager (z.B. den Netzwerk-Manager 200) übermitteln, um die Zuordnung von spektralen Ressourcen 216 zu den Client-Vorrichtungen 214 anzuweisen. Anschaulich kann der Netzwerk-Überwacher 500 eine Ausgabe 504 liefern, die die Qualitätsfaktoren 218 repräsentiert, die mit den Client-Vorrichtungen 214 assoziiert sind. In einigen Aspekten kann die Ausgabe 504 ferner die Präferenzlisten der Client-Vorrichtungen 214 aufweisen bzw. repräsentieren.

Der Prozessor 502 kann gemäß dem Verfahren 510 eingerichtet sein, zum Empfangen von Kanalzustandsinformationen 502 von den Client-Vorrichtungen 214, z.B. von mindestens einer Client-Vorrichtung 214, z.B. von jeder Client-Vorrichtung 214. In dem Beispielszenario in FIG 5 kann der Prozessor 502 erste bis fünfte Kanalzustandsinformationen 502-1...502-5 empfangen. Die Kanalzustandsinformationen 502 einer Client-Vorrichtung 214 können eine Kanalqualität jeder Kanalrealisierung 220 zwischen der (jeweiligen) Client-Vorrichtung 214 und dem Netzwerk-Vorrichtung 212 aufweisen oder repräsentieren. Dies ist in FIG.5 zum Beispiel in Bezug auf die ersten Kanalzustandsinformationen 502-1 dargestellt, die der ersten Client-Vorrichtung 214-1 assoziiert ist.

Im Allgemeinen können die Kanalzustandsinformationen 502 einer Client-Vorrichtung 214 von verschiedenen Faktoren abhängen, die die Kommunikation zwischen der Client-Vorrichtung 214 und der Netzwerk-Vorrichtung 212 beeinflussen können, z.B. von verschiedenen Faktoren, die die Kanalrealisierungen 220 (anschaulich die physikalischen Ausbreitungspfade) zwischen der Client-Vorrichtung 214 und der Netzwerk-Vorrichtung 212 beeinflussen können. Als Beispiel können die Kanalzustandsinformationen 502 von einer relativen Position der Client-Vorrichtung 214 in Bezug auf die Netzwerk-Vorrichtung 212 abhängen. Als weiteres Beispiel, zusätzlich oder alternativ, können die Kanalzustandsinformationen 502 von Interferenzen abhängen, die die Client-Vorrichtung 214 in ihren Kanalrealisierungen 220 erfährt.

Referenzsignale können verwendet werden, um die Kanalzustandsinformationen 502, z.B. die Kanalqualität, der Kanalrealisierungen 220 zu ermitteln. In dieser Hinsicht kann der Prozessor 502 eingerichtet sein, für mindestens eine (z.B. für jede) Client-Vorrichtung 214, zum Steuern einer Übertragung von Referenzsignalen über jede der jeweiligen Kanalrealisierungen 220. In einem beispielhaften Szenario kann der Prozessor 502 eingerichtet sein, für eine (z.B. für jede) Client-Vorrichtung 214, zum Steuern der Übertragung eines ersten Referenzsignals mittels einer ersten Kanalrealisierung 220, der Übertragung eines zweiten Referenzsignals mittels einer zweiten Kanalrealisierung 220, usw. Ein Referenzsignal kann anschaulich ein Pilotsignal sein, das zur Ermittlung der Kanalqualität verwendet wird. Beispielsweise kann ein Referenzsignal ein sogenanntes Sounding-Reference-Signal (SRS) sein bzw. aufweisen.

Zum Beispiel kann der Prozessor 502 eingerichtet sein zum Durchführen der Übertragung der Referenzsignale. Alternativ kann der Prozessor 502 eingerichtet sein zum Steuern (z.B. Anweisen) der Netzwerk-Vorrichtung 212, die Referenzsignale an die Client-Vorrichtung(en) 214 zu übertragen. In einem beispielhaften Szenario kann eine Basisstation Sounding-Reference-Signals (SRS) aussenden welche über das gesamte zur Verfügung stehende Spektrum verteilt sind. Diese finden sich zum Beispiel bereits in bestehenden Standards wie LTE und 5G. Analog dazu ist in 802.11 (WLAN) jedem Datenpaket eine Präambel zur Kanalschätzung vorangestellt.

Die Kanalzustandsinformationen 502 können eine Empfangsqualität jedes Referenzsignals aufweisen. Anschaulich können die Kanalinformationen basieren auf einer Empfangsqualität der Referenzsignale ermittelt werden, z.B. bei den Client-Vorrichtungen 214. In dieser Hinsicht kann der Prozessor 502 eingerichtet sein zum Ermitteln der Empfangsqualität, oder zum Empfangen solcher Informationen von den Client-Vorrichtungen 214. In einer bevorzugten Konfiguration kann der Prozessor 502 eingerichtet sein zum Empfangen jeweiliger Kanalzustandsinformationen 512 von jeder Client-Vorrichtungen 214, z.B. basierend auf einem entsprechenden Empfang von Referenzsignalen mittels der jeweiligen Kanalrealisierungen 220. Anschaulich können die einzelnen Nutzer anhand der SRS ihre Kanalqualität auf den jeweiligen Frequenzen schätzen und das Ergebnis zurück senden (z.B. zurück zur Basisstation).

Unter Berücksichtigung des obigen Beispiels kann die Kanalzustandsinformationen 512 für eine Client-Vorrichtung 214 eine erste Kanalqualität einer ersten Kanalrealisierung 220 basierend auf einem Empfang des ersten Referenzsignals, eine zweite Kanalqualität einer zweiten Kanalrealisierung 220 basierend auf einem Empfang des zweiten Referenzsignals usw. aufweisen.

Zum Ermitteln der Kanalqualität können verschiedene Parameter verwendet werden, die z.B. anhand der Referenzsignale gemessen werden. Als Beispiele können die Kanalzustandsinformationen 512 für jede Client-Vorrichtung 214 aufweisen: eine jeweilige Paketverlustrate mittels jeder der Kanalrealisierungen 220; ein jeweiliges Signal-Rausch-Verhältnis in jeder der Kanalrealisierungen 220; einen Signalpegel einer anderen Datenübertragung in jeder der Kanalrealisierungen 220; und/oder dergleichen.

Der Prozessor 502 kann eingerichtet sein, um die Qualitätsfaktoren 218 der Client-Vorrichtungen 214 basierend auf den empfangenen Kanalzustandsinformationen 512 zu ermitteln.

Als Beispiel kann der Prozessor 502 eingerichtet sein, um den Qualitätsfaktor 218 einer Client-Vorrichtung 214 als die höchste Kanalqualität der Kanalrealisierungen 220 basierend auf den empfangenen Kanalzustandsinformationen 512 zu ermitteln (z.B. zu berechnen). Zum Beispiel kann der Prozessor 502 eingerichtet sein, um den Qualitätsfaktor 218 einer Client-Vorrichtung 214 als das größte Signal-Rausch-Verhältnis unter den Kanalrealisierungen 220 zu ermitteln (z.B. zu berechnen).

Als weiteres Beispiel kann der Prozessor 502 eingerichtet sein, um den Qualitätsfaktor 218 einer Client-Vorrichtung 214 als eine Kombination einer Teilmenge der Kanalqualitäten der Kanalrealisierungen 220 basierend auf den empfangenen Kanalzustandsinformationen 512 zu ermitteln (z.B. zu berechnen). Zum Beispiel kann der Prozessor 502 eingerichtet sein, um den Qualitätsfaktor 218 einer Client-Vorrichtung 214 als eine Summe der N größten Signal-Rausch-Verhältnisse unter den Kanalrealisierungen 220 (mit N gleich oder größer als 2) zu ermitteln (z.B. zu berechnen).

Als weiteres Beispiel kann der Prozessor 502 eingerichtet sein, um den Qualitätsfaktor 218 einer Client-Vorrichtung 214 als Produkt zwischen dem größten Signal-Rausch-Verhältnis und dem N-ten größten Signal-Rausch-Verhältnis unter den Kanalrealisierungen 220 zu ermitteln (z.B. zu berechnen).

Gemäß verschiedenen Aspekten kann der Prozessor 502 zusätzlich oder alternativ eingerichtet sein, um eine Präferenzliste für mindestens eine (z.B. jede) Client-Vorrichtung 214 auf der Grundlage der empfangenen Kanalzustandsinformationen 512 zu ermitteln (z.B. zu berechnen oder zu generieren). Anschaulich kann der Prozessor 502 eingerichtet sein, um die Kanalrealisierungen 220 einer Client-Vorrichtung 214 gemäß der jeweiligen Kanalqualität zu ordnen, z.B. gemäß dem jeweiligen Signal-Rausch-Verhältnis. In einer bevorzugten Konfiguration kann der Prozessor 502 eingerichtet sein, eine Präferenzliste einer Client-Vorrichtung 214 zu ermitteln, indem er die jeweiligen Kanalrealisierungen 220 nach abnehmender Kanalqualität, z.B. nach abnehmendem Signal-Rausch-Verhältnis, ordnet. Es versteht sich jedoch, dass auch andere Kriterien vorgesehen werden können, z.B. eine Ordnung nach zunehmender Kanalqualität (z.B. nach zunehmendem Signal-Rausch-Verhältnis), als weiteres Beispiel.

Der Prozessor 502 kann eingerichtet sein zum Ermitteln der Qualitätsfaktoren 218 (und/oder der Präferenzlisten) zu Beginn einer Zuordnungsprozedur und/oder während einer Zuordnungsprozedur, um die Qualitätsfaktoren 218 (und/oder der Präferenzlisten) anzupassen, falls sich die Qualität der Kommunikation verändert hat. Zu Beginn einer Zuordnungsprozedur kann das Ausgabesignal 514 für jede Client-Vorrichtung 214 angeben, welche Kanalrealisierung 220 (und entsprechend welche spektrale Ressourcen) oder welche Kanalrealisierungen 220 für die Übertragung von Daten zu verwenden sind.

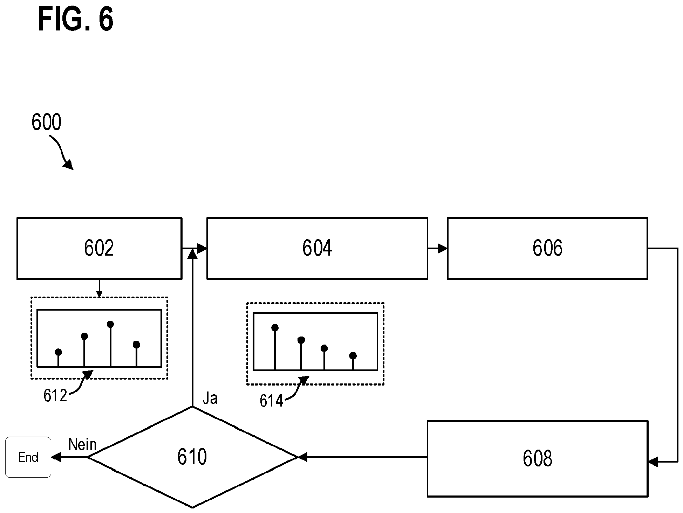

FIG.6 zeigt ein schematisches Flussdiagramm eines Verfahrens 600 zum Zuordnen von spektralen Ressourcen in einem Kommunikationsnetzwerk. Das Verfahren 600 kann Aspekte aufweisen, die in Bezug auf den Netzwerk-Manager 200 und den Netzwerk-Monitor 500 beschrieben wurden (z.B. Aspekte, die sich auf die Verfahren 210, 510 beziehen). In verschiedenen Aspekten kann das Verfahren 600 als ein iterativer Algorithmus zum Zuordnen von spektralen Ressourcen gemäß einem Max-Min-Kriterium zur Verbesserung der Zuverlässigkeit eines Systems verstanden werden.

Das Verfahren 600 kann in 602 das Empfangen (oder das Ermitteln) von Kanalzustandsinformationen für jede Client-Vorrichtung einer Vielzahl von Client-Vorrichtungen aufweisen. Zum Beispiel kann das Verfahren 600 das Empfangen von Informationen aufweisen, die das Signal-Rausch-Verhältnis für die Kanalrealisierungen zwischen jeder Client-Vorrichtung und einer Netzwerk-Vorrichtung repräsentieren. Anschaulich kann das Verfahren 600 aufweisen, das Erhalten des beobachteten Signal-Rausch-Verhältnisses jedes Benutzers für jede Kanalrealisierung (z.B. für jeden Unterkanal). Zum Beispiel kann das Verfahren 600 das Empfangen der Kanalzustandsinformationen an einer Netzwerkvorrichtung (z.B. einer Basisstation) von jedem der Client-Vorrichtungen aufweisen.

Zum Beispiel können die Kanalzustandsinformationen in Form einer nicht geordneten Liste 612 der Kanalrealisierungen (z.B. der Unterkanäle) vorliegen, z.B. einer Liste, die die Kanalrealisierungen und das entsprechende Signal-Rausch-Verhältnis aufweist. Anschaulich kann die Liste 612 die Kanalrealisierungen einfach nach Nummern geordnet aufweisen (z.B. erste, zweite usw.), z.B. geordnet nach dem entsprechenden Frequenzbereich, aber nicht geordnet nach der Kanalqualität (z.B. nicht geordnet nach dem Signal-Rausch-Verhältnis).

Das Verfahren 600 kann ferner aufweisen, in 604, das Ermitteln (z.B. Berechnen oder Generieren) einer Präferenzliste 614 für jede Client-Vorrichtung, basierend auf den empfangenen Kanalstatusinformationen. Zum Beispiel kann das Verfahren das Sortieren der Kanalrealisierungen (z.B. der Unterkanäle) einer Client-Vorrichtung nach Kanalqualität (z.B. nach absteigendem Signal-Rausch-Verhältnis) aufweisen, um eine Präferenzliste für die Client-Vorrichtung zu ermitteln. Dies ist in FIG.6 mit der Präferenzliste 614 dargestellt, in der die Kanalrealisierungen nach absteigendem Signal-Rausch-Verhältnis geordnet sind, um eine Präferenzliste 614 für eine entsprechende Client-Vorrichtung zu erstellen.

Das Verfahren 600 kann ferner in 606 aufweisen, das Ermitteln (z.B. Berechnen oder Empfangen) eines Qualitätsfaktors für jede Client-Vorrichtung (anschaulich für jeden Benutzer). Das Verfahren 600 kann das Ermitteln des Qualitätsfaktors einer Client-Vorrichtung aufweisen, basierend auf den empfangenen Kanalzustandsinformationen (und/oder basierend auf der Präferenzliste) für die Client-Vorrichtung. Das Verfahren 600 kann das Ermitteln des Qualitätsfaktors auf jede geeignete Weise aufweisen, wie oben beschrieben, z.B. als größtes Signal-Rausch-Verhältnis, als Summe der Signal-Rausch-Verhältnisse einer Teilmenge von N Kanalrealisierungen oder als Produkt zwischen dem größten Signal-Rausch-Verhältnis und dem N-ten größten Signal-Rausch-Verhältnis der Kanalrealisierungen.

Das Verfahren 600 kann ferner aufweisen, in 608, das Zuordnen einer spektralen Ressource (z.B. eines Unterkanals) zu der Client-Vorrichtung mit dem niedrigsten Qualitätsfaktor (anschaulich, dem Benutzer mit der geringsten Kommunikationsqualität). Zum Beispiel kann das Verfahren 600 das Zuordnen der bevorzugten spektralen Ressource zu der Client-Vorrichtung mit dem niedrigsten Qualitätsfaktor aufweisen, z.B. die spektrale Ressource, die der Kanalrealisierung mit der höchsten Kanalqualität für diese Client-Vorrichtung entspricht (z.B. die Kanalrealisierung mit dem größten Signal-Rausch-Verhältnis, z.B. die erste Ressource in der Präferenzliste). Das Verfahren 600 kann ferner das Entfernen der zugeordneten spektralen Ressource aus den Präferenzlisten der Client-Vorrichtungen aufweisen, z.B. das Entfernen der entsprechenden Kanalrealisierungen aus den Präferenzlisten.

Das Verfahren 600 kann ferner in 610 aufweisen, das Ermitteln, ob es mindestens eine Client-Vorrichtung mit einer unvollständigen Zuordnung gibt. Wenn ja (Ja in 610), kann das Verfahren 600 zu 604 zurückkehren und eine weitere Zuordnung durchführen. Falls nein (Nein in 610), kann das Verfahren 600 beendet werden. Beispielsweise kann das Verfahren 600 innerhalb eines Zeitfensters durchgeführt werden, und eine weitere Iteration des Verfahrens 600 kann in einem weiteren Zeitfenster durchgeführt werden.

Gemäß verschiedener Aspekte kann ein Computerprogrammprodukt bereitgestellt werden, wobei das Computerprogrammprodukt Befehle aufweist, die, wenn das Programm von einem Computer ausgeführt wird, den Computer veranlassen, eines der hierin beschriebenen Verfahren (z.B. die Verfahren 210, 510, 600) durchzuführen.

Der hierin verwendete Begriff "Daten" kann Informationen in jeder geeigneten analogen oder digitalen Form aufweisen, z.B. in Form einer Datei, eines Abschnitts einer Datei, eines Satzes von Dateien, eines Signals oder Stroms, eines Abschnitts eines Signals oder Stroms, eines Satzes von Signalen oder Strömen und dergleichen. Noch kann der Begriff "Daten" auch verwendet werden, um einen Verweis auf Informationen, z.B. in Form eines Zeigers, zu bezeichnen. Der Begriff "Daten" ist jedoch nicht auf die vorgenannten Beispiele beschränkt und kann verschiedene Formen annehmen und jede beliebige Information repräsentieren, wie sie in der Fachwelt verstanden wird.

Der Begriff "Speicher", wie er hierin verwendet wird, kann als ein computerlesbares Medium (z.B. ein nichttransitorisches computerlesbares Medium) verstanden werden, in dem Daten oder Informationen zum Abruf gespeichert werden können. Die hierin enthaltenen Verweise auf "Speicher" können daher so verstanden werden, dass sie sich auf flüchtige oder nichtflüchtige Speicher beziehen, einschließlich Direktzugriffsspeicher (RAM), Festwertspeicher (ROM), Flash-Speicher, Solid-State-Speicher, Magnetband, Festplattenlaufwerk, optisches Laufwerk, und andere, oder eine beliebige Kombination davon. Register, Schieberegister, Prozessorregister, Datenpuffer usw. werden hierin ebenfalls unter dem Begriff Speicher gefasst. Der Begriff "Software" bezieht sich auf alle Arten von ausführbaren Befehlen, einschließlich Firmware.

Die vorstehende Beschreibung wurde nur als Beispiel gegeben, und der Fachmann wird verstehen, dass Änderungen vorgenommen werden können, ohne vom breiteren Umfang der Erfindung, wie sie in den Patentansprüchen dargelegt ist, abzuweichen. Die Beschreibung und die Zeichnungen sind daher eher in anschaulichem Sinne als in einschränkendem Sinne zu verstehen.

Es ist verstanden, dass die Implementierungen der hierin detailliert beschriebenen Verfahren demonstrativen Charakter haben und sind daher als geeignet verstanden, in einer entsprechenden Vorrichtung implementiert werden zu können. Ebenso ist verstanden, dass Implementierungen von hierin detailliert beschriebenen Vorrichtungen als geeignet verstanden sind, als ein entsprechendes Verfahren implementiert werden zu können. Es versteht sich somit, dass eine Vorrichtung, die einem hierin detailliert beschriebenen Verfahren entspricht, eine oder mehrere Komponenten aufweisen kann, die eingerichtet sind zum Durchführen jedes Aspekts des zugehörigen Verfahrens.

**Patentansprüche**

1.  Netzwerk-Manager (200) aufweisend:

    einen Prozessor (202), wobei der Prozessor (202) eingerichtet ist zum Ausführen einer Zuordnungsprozedur (230), um jeder Client-Vorrichtung (214) aus einer Vielzahl von Client-Vorrichtungen (214) eine oder mehrere spektrale Ressourcen (216) aus einer Vielzahl von spektralen Ressourcen (216) zuzuordnen, die für eine Kommunikation mit einer Netzwerk-Vorrichtung (212) verfügbar sind,
    wobei die Zuordnungsprozedur (230) eine Vielzahl von Iterationen aufweist, wobei für jede Iteration der Prozessor (202) eingerichtet ist zum:

    Ermitteln einer Vielzahl von Qualitätsfaktoren (218), welche mit der Vielzahl von Client-Vorrichtungen (214) assoziiert sind, wobei ein Qualitätsfaktor (218) einer Client-Vorrichtung (214) eine Kommunikationsqualität von einer oder mehreren Kanalrealisierungen (220) zwischen der Client-Vorrichtung (214) und der Netzwerk-Vorrichtung (212) repräsentiert; und
    Zuordnen einer spektralen Ressource (216) der noch nicht zugeordneten spektralen Ressourcen (216) an die Client-Vorrichtung (214) mit dem niedrigsten Qualitätsfaktor (218) unter der Vielzahl von Qualitätsfaktoren (218).

2.  Netzwerk-Manager (202) gemäß Anspruch 1, wobei der Prozessor (202) ferner eingerichtet ist, für mindestens eine Iteration, zum:

    Ermitteln, für jede Client-Vorrichtung (214), einer jeweiligen Präferenzliste (302), welche die jeweiligen Kanalrealisierungen (220) zwischen der Client-Vorrichtung (214) und der Netzwerk-Vorrichtung (212), geordnet nach absteigender Kanalqualität, aufweist; und
    Zuordnen der spektralen Ressource (216), welcher der ersten Kanalrealisierung in der jeweiligen Präferenzliste (302) entspricht, an die Client-Vorrichtung (214) mit dem niedrigsten Qualitätsfaktor (218).

3.  Netzwerk-Manager (200, 500) gemäß Anspruch 1 oder 2,

wobei der Prozessor (202, 502) ferner eingerichtet ist zum Empfangen von Kanalzustandsinformationen (502) von mindestens einer Client-Vorrichtung (214),
wobei die Kanalzustandsinformationen (502) eine Kanalqualität jeder Kanalrealisierung (220) zwischen der mindestens einen Client-Vorrichtung (214) und dem Netzwerk-Vorrichtung (212) repräsentieren; und
Ermitteln des Qualitätsfaktor (218), der mit der mindestens einen Client-Vorrichtung (214) assoziiert ist, basierend auf den empfangenen Kanalzustandsinformationen (502) .

4.  Netzwerk-Manager (200) gemäß einem der Ansprüche 1 bis 3,
wobei der Prozessor (200) ferner eingerichtet ist, für mindestens eine Iteration, zum:
Zuordnen der spektralen Ressource (216) an die Client-Vorrichtung (214) mit dem niedrigsten Qualitätsfaktor, für welche die entsprechende Kanalrealisierung (220) unter den Kanalrealisierungen (220) zwischen der Client-Vorrichtung (214) und der Netzwerk-Vorrichtung (212) die größte Kanalqualität aufweist.

5.  Netzwerk-Manager (200) gemäß einem der Ansprüche 1 bis 4,
wobei der Qualitätsfaktor (218) einer Client-Vorrichtung (218) einer Summe der Signal-Rausch-Verhältnissen einer Untermenge von Kanalrealisierungen (220) zwischen der Client-Vorrichtung (214) und der Netzwerk-Vorrichtung (212) entspricht.

6.  Netzwerk-Manager (200) gemäß einem der Ansprüche 1 bis 4,

    wobei der Qualitätsfaktor (218) einer Client-Vorrichtung (214) einem Produkt zwischen einem ersten Faktor und einem zweiten Faktor aufweist,
    wobei der erste Faktor das größte Signal-Rausch-Verhältnis unter den Signal-Rausch-Verhältnissen der Kanalrealisierungen (220) zwischen der Client-Vorrichtung (214) und der Netzwerk-Vorrichtung (212) aufweist,
    wobei der zweite Faktor das N-te größte Signal-Rausch-Verhältnis unter den Signal-Rausch-Verhältnissen der Kanalrealisierungen (220) zwischen der Client-Vorrichtung (214) und der Netzwerk-Vorrichtung (212) aufweist, und
    wobei N eine ganze Zahl ist, die kleiner ist als die Gesamtzahl der Kanalrealisierungen (220) für die Client-Vorrichtung (214).

7.  Netzwerk-Manager (200) gemäß einem der Ansprüche 1 bis 6,
wobei der Prozessor (202) ferner eingerichtet ist zum Abschließen der Zuordnungsprozedur innerhalb eines vordefinierten Zeitfensters und zum Durchführen einer weiteren Zuordnungsprozedur in einem weiteren Zeitfenster.

8. Netzwerk-Manager (200) gemäß Anspruch 7, wobei der Prozessor (202) derart eingerichtet ist, dass er während jedes Zeitfensters jeder Client-Vorrichtung (214) mindestens eine spektrale Ressource (216) zuordnet.

9. Netzwerk-Manager (200) gemäß einem der Ansprüche 1 bis 8,

   wobei jeder Client-Vorrichtung (214) eine jeweilige maximale Anzahl von spektralen Ressourcen (216) assoziiert ist, die der Client-Vorrichtung (214) zugeordnet werden können; und wobei der Prozessor (202) eingerichtet ist, für jede Iteration, zum:
   Ignorieren einer Client-Vorrichtung (214), falls der Client-Vorrichtung (214) eine Anzahl von spektralen Ressourcen (216) zugeordnet wurde, die gleich der jeweiligen maximalen Anzahl von spektralen Ressourcen (216) ist, die der Client-Vorrichtung (214) zugeordnet werden können.

10. Netzwerk-Manager (200) gemäß einem der Ansprüche 1 bis 9,
    wobei die spektralen Ressourcen (216), die für die Kommunikation mit der Netzwerk-Vorrichtung (212) zur Verfügung stehen, in Frequenz orthogonal zueinander sind.

11. Netzwerk-Manager gemäß einem der Ansprüche 1 bis 10,
    wobei die Netzwerk-Vorrichtung (212) eine Basisstation ist oder aufweist.

12. Verfahren (600) zum Zuordnen von spektralen Ressourcen in einem Kommunikationsnetzwerk, wobei das Verfahren (600) aufweist:

    Empfangen (602) von Kanalzustandsinformationen für jede Client-Vorrichtung einer Vielzahl von Client-Vorrichtungen;
    Ermitteln (604) einer Präferenzliste für jede Client-Vorrichtung, basierend auf den empfangenen Kanalstatusinformationen,
    welche die Präferenzliste einer Client-Vorrichtung jeweilige Kanalrealisierungen zwischen der Client-Vorrichtung und einer Netzwerk-Vorrichtung, geordnet nach absteigender Kanalqualität, aufweist;
    Ermitteln (606) eines Qualitätsfaktors für jede Client-Vorrichtung basierend auf den empfangenen Kanalzustandsinformationen,

wobei ein Qualitätsfaktor einer Client-Vorrichtung eine Kommunikationsqualität der ein oder mehreren Kanalrealisierungen zwischen der Client-Vorrichtung und der Netzwerk-Vorrichtung repräsentiert; und
Zuordnen einer spektralen Ressource zu der Client-Vorrichtung mit dem niedrigsten Qualitätsfaktor,
wobei die zugeordnete spektrale Ressource mit der ersten Kanalrealisierung in der Präferenzliste der Client-Vorrichtung assoziiert ist.

# FIG. 1A

FIG. 1B

102, 104

# FIG. 2

# FIG. 3

# FIG. 4

# FIG. 5

500

502

510

504

510

214

214-4

214-2

214-5

214-3

214-1

512-5

512-5

512

512-4

512-1

512-3

212

220

218

514

218-3

218-4

218-2

218-5

218-1

# FIG. 6

600

612

614

Ja

Nein

End

602

604

606

608

610

# EP 4 391 686 A1

Europäisches Patentamt
European Patent Office
Office européen des brevets

## EUROPÄISCHER RECHERCHENBERICHT

**Nummer der Anmeldung**

EP 23 21 7713

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | RHEE W ET AL: "INCREASE IN CAPACITY OF MULTIUSER OFDM SYSTEM USING DYNAMIC SUBCHANNEL ALLOCATION", VTC 2000-SPRING. 2000 IEEE 51ST. VEHICULAR TECHNOLOGY CONFERENCE PROCEEDINGS. TOKYO, JAPAN, MAY 15-18, 2000; [IEEE VEHICULAR TECHNOLGY CONFERENCE], NEW YORK, NY : IEEE, US, Bd. CONF. 51, 15. Mai 2000 (2000-05-15), Seiten 1085-1089, XP000968037, DOI: 10.1109/VETECS.2000.851292 ISBN: 978-0-7803-5719-8 * Seite 1086 – rechte Spalte, Absatz 1-2; Abbildung 1 * * Seite 1087, rechte Spalte, letzter Absatz – Seite 1088, linke Spalte * ----- | 1-12 | INV. H04W72/0453 H04W72/121 H04W72/542 H04W72/56 |
| X | TRASL ANDREAS ET AL: "On the Outage Probability of Channel Prediction Enabled Max-Min Radio Resource Allocation", 2022 IEEE WIRELESS COMMUNICATIONS AND NETWORKING CONFERENCE (WCNC), IEEE, 10. April 2022 (2022-04-10), Seiten 638-643, XP034123071, DOI: 10.1109/WCNC51071.2022.9771598 * Seite 639; Abbildung 1 * * Seite 639, Abschnitt III – Seite 640, linke Spalte * ----- | 1-12 | |
| A | US 2009/164638 A1 (JANG CHOUL SOO [KR] ET AL) 25. Juni 2009 (2009-06-25) * Absatz [0009] – Absatz [0019]; Abbildungen 1,2 * ----- | 1-12 | |

**RECHERCHIERTE SACHGEBIETE (IPC)**

H04W

Der vorliegende Recherchenbericht wurde für alle Patentansprüche erstellt

| Recherchenort | Abschlußdatum der Recherche | Prüfer |
|---|---|---|
| Den Haag | 8. Mai 2024 | Vercauteren, Steven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 21 7713

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2024

| Im Recherchenbericht angeführtes Patentdokument | Datum der Veröffentlichung | Mitglied(er) der Patentfamilie | Datum der Veröffentlichung |
|---|---|---|---|
| US 2009164638 A1 | 25-06-2009 | KR 20090068596 A<br>US 2009164638 A1 | 29-06-2009<br>25-06-2009 |

Für nähere Einzelheiten zu diesem Anhang : siehe Amtsblatt des Europäischen Patentamts, Nr.12/82

EPO FORM P0461